(19) Europäisches Patentamt
European Patent Office
Office européen des brevets

(11) **EP 2 794 271 B1**

## (12) EUROPÄISCHE PATENTSCHRIFT

(45) Veröffentlichungstag und Bekanntmachung des Hinweises auf die Patenterteilung:
**21.02.2018 Patentblatt 2018/08**

(21) Anmeldenummer: **12824794.7**

(22) Anmeldetag: **17.12.2012**

(51) Int Cl.:
$B32B\ 27/32^{(2006.01)}$    $B29C\ 55/00^{(2006.01)}$
$B29C\ 55/12^{(2006.01)}$    $C08J\ 5/18^{(2006.01)}$
$C08K\ 5/00^{(2006.01)}$    $C08K\ 5/098^{(2006.01)}$
$H01M\ 2/14^{(2006.01)}$    $H01M\ 2/16^{(2006.01)}$
$B29L\ 31/34^{(2006.01)}$    $B29C\ 47/00^{(2006.01)}$
$B29K\ 23/00^{(2006.01)}$    $B29K\ 105/04^{(2006.01)}$
$B29C\ 55/02^{(2006.01)}$    $B29C\ 55/14^{(2006.01)}$
$H01M\ 10/052^{(2010.01)}$    $H01M\ 10/42^{(2006.01)}$
$B29C\ 71/00^{(2006.01)}$

(86) Internationale Anmeldenummer:
**PCT/EP2012/005204**

(87) Internationale Veröffentlichungsnummer:
**WO 2013/091817 (27.06.2013 Gazette 2013/26)**

(54) **HOCHPORÖSE SEPARATOR-FOLIE MIT BESCHICHTUNG UND ABSCHALTFUNKTION**

HIGHLY POROUS SEPARATOR FILM HAVING A COATING AND A DISCONNECTING FUNCTION

FEUILLE DE SÉPARATION À HAUTE POROSITÉ AVEC REVÊTEMENT ET FONCTION DE COUPURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2011 DE 102011121606**

(43) Veröffentlichungstag der Anmeldung:
**29.10.2014 Patentblatt 2014/44**

(73) Patentinhaber: **Treofan Germany GmbH & Co. KG**
**66539 Neunkirchen (DE)**

(72) Erfinder:
• **SCHMITZ, Bertram**
**57200 Sarreguemines (FR)**

• **BUSCH, Detlef**
**66740 Saarlouis (DE)**
• **KLEIN, Dominic**
**66450 Bexbach (DE)**

(74) Vertreter: **Mai Dörr Besier**
**European Patent Attorneys**
**European Trademark Attorneys**
**Patentanwälte**
**Kreuzberger Ring 64**
**65205 Wiesbaden (DE)**

(56) Entgegenhaltungen:
**WO-A1-2010/066389**    **WO-A1-2010/066390**
**WO-A2-03/073534**    **WO-A2-2005/038946**

**Beschreibung**

Die vorliegende Erfindung betrifft eine beschichtete, poröse Folie mit doppelter Sicherung und ihre Verwendung als Separator, sowie ein Verfahren zur Herstellung der Folie.

Moderne Geräte erfordern eine Energiequelle, wie Batterien oder Akkus, die eine räumlich unabhängige Nutzung ermöglichen. Batterien haben den Nachteil, dass man sie entsorgen muss. Daher werden vermehrt Akkumulatoren (sekundäre Batterien) eingesetzt, die man mit Hilfe von Ladegeräten am Stromnetz immer wieder aufladen kann. Herkömmliche Nickel-Cadmium-Akkus (NiCd-Akkus) können beispielsweise bei sachgerechtem Gebrauch eine Lebensdauer von ca. 1000 Ladezyklen erreichen.

In Hochenergie-oder Hochleistungssystemen werden heute zunehmend Lithium-, Lithiumionen-, Lithium-Polymer-, und Erdalkali-Batterien als Akkumulatoren eingesetzt.

Batterien und Akkumulatoren bestehen immer aus zwei Elektroden, die in eine Elektrolytlösung eintauchen und einem Separator, der Anode und Kathode trennt. Die verschiedenen Akkutypen unterscheiden sich durch das verwendete Elektrodenmaterial, den Elektrolyten und den verwendeten Separator. Ein Batterieseparator hat die Aufgabe Kathode und Anode in Batterien, beziehungsweise negative und positive Elektrode in Akkumulatoren, räumlich zu trennen. Der Separator muss eine Barriere sein, welche die beiden Elektroden elektrisch voneinander isoliert, um interne Kurzschlüsse zu vermeiden. Gleichzeitig muss der Separator jedoch durchlässig für Ionen sein, damit die elektrochemischen Reaktionen in der Zelle ablaufen können.

Ein Batterieseparator muss dünn sein, damit der Innenwiderstand möglichst gering ist und eine hohe Packungsdichte erzielt werden kann. Nur so sind gute Leistungsdaten und hohe Kapazitäten möglich. Zusätzlich ist es erforderlich, daß die Separatoren den Elektrolyten aufsaugen und bei gefüllten Zellen den Gasaustausch gewährleisten. Während früher u. a. Gewebe verwendet wurden, sind heutzutage überwiegend feinporige Materialien, wie Vliesstoffe und Membranen, im Einsatz.

In Lithium-Batterien ist das Auftreten von Kurzschlüssen ein Problem. Bei thermischer Belastung infolge von Kurzschlüssen oder mangelhaftem Kühlsystem kann es in den Lithium-Ionen-Batterien zu einem Schmelzen des Batterieseparators und damit zu einem Kurzschluss mit verheerenden Folgen kommen. Ähnliche Gefahren bestehen, wenn die Lithium-Batterien mechanisch beschädigt oder durch mangelhafte Elektronik der Ladegeräte überladen werden.

Um die Sicherheit der Lithium-Ionen-Batterien zu erhöhen, wurden in der Vergangenheit Abschalt-Separatoren entwickelt (Shut Down Membranen). Diese speziellen Separatoren schließen ihre Poren in kürzester Zeit bei einer bestimmten Temperatur, die deutlich unterhalb des Schmelzpunktes oder des Zündpunktes von Lithium liegt. Damit werden die katastrophalen Folgen eines Kurzschlusses bei den Lithium-Batterien weitgehend verhindert.

Gleichzeitig ist jedoch für die Separatoren auch eine hohe mechanische Festigkeit gewünscht, welche durch Materialien mit hohen Schmelzetemperaturen gewährleistet wird. So sind beispielsweise Polypropylen-Membranen auf Grund der guten Durchstoßfestigkeit vorteilhaft, aber der Schmelzpunkt des Polypropylens liegt mit ca. 164°C sehr nahe am Flammpunkt des Lithiums (170°C).

Hochenergiebatterien basierend auf der Lithiumtechnologie werden in Anwendungen eingesetzt, bei denen es darauf ankommt eine möglichst große Menge an elektrischer Energie auf geringstem Raum verfügbar zu haben. Dies ist beispielsweise bei Traktionsbatterien für den Einsatz in Elektrofahrzeugen aber auch in anderen mobilen Anwendungen in denen maximale Energiedichte bei geringem Gewicht gefordert ist, wie z.B. Luft- und Raumfahrt der Fall. Augenblicklich werden in Hochenergiebatterien Energiedichten von 350 bis 400 Wh/L bzw. 150 bis 200 Wh/kg erzielt. Diese hohen Energiedichten erreicht man durch den Einsatz von speziellem Elektrodenmaterial (z.B. Li-CoO2) und den sparsameren Einsatz von Gehäusematerialien. So sind in Li-Batterein des Pouch-Zellen-Typs die einzelnen Batterieeinheiten nur noch durch eine Folie voneinander getrennt.

Auf Grund dieser Tatsache sind in diesen Zellen auch höhere Anforderungen an den Separator gestellt, da bei einem internen Kurzschluss und Überhitzung die explosionsartigen Verbrennungsreaktionen auf die benachbarten Zellen übergreifen.

Separatormaterialien für diese Anwendungen müssen folgende Eigenschaften besitzen: Sie müssen möglichst dünn sein, um einen geringen spezifischen Platzbedarf zu gewährleisten und um den Innenwiderstand klein zu halten. Um diese geringen Innenwiderstände zu gewährleisten ist es wichtig, dass der Separator auch eine große Porosität aufweist. Ferner müssen sie leicht sein, damit ein geringes spezifisches Gewicht erreicht wird und sie müssen absolut sicher sein. Dies bedeutet dass im Falle einer Überhitzung oder mechanischen Beschädigung positive und negative Elektrode auf jeden Fall getrennt bleiben müssen um weitere chemische Reaktionen, die zum Brand oder Explosion der Batterien führen, zu verhindern.

Es ist im Stand der Technik bekannt Polypropylenmembranen mit weiteren Schichten zu kombinieren, die aus Materialien mit niedrigerem Schmelzpunkt aufgebaut sind, beispielsweise aus Polyethylen. Im Falle einer Überhitzung durch Kurzschluss oder andere äußere Einflüsse schmilzt die Polyethylenschicht und verschließt die Poren der porösen Polypropylenschicht (Abschaltfunktion), wodurch der Ionenfluß in der Batterie und somit der Stromfluß unterbrochen wird. Allerdings schmilzt bei weiterem Temperaturanstieg (> 160°C) auch die Polypropylenschicht und ein interner Kurzschluss durch Berührung von Anode und Kathode und die daraus resultierenden Probleme wie Selbstentzündung und Explosion können nicht mehr verhindert werden. Zusätzlich ist die Haftung der Polyethylenschichten auf Polypropylen problematisch, so dass diese Schichten nur durch Laminierung kombiniert werden können oder nur ausgewählte Polymere dieser beiden Klassen coextrudiert werden können. Diese Separatoren bieten in Hochenergieanwendungen nur unzureichende Sicherheit. Eine Derartige Folie mit Abschaltfunktion ist in WO 2010048395 beschrieben.

US2011171523 beschreibt einen hitzeresistenten Separator der über ein Lösemittelverfahren gewonnen wird. Dabei werden in einem ersten Schritt anorganische Partikel (Kreide, Silikate oder Aluminiumoxid) in den Rohstoff (UHMW-PE) zusammen mit einem Öl eincompoundiert werden. Diese Mischung wird dann durch eine Düse zu einer Vorfolie Extrudiert, aus der Vorfolie dann das Öl mittels eines Lösungsmittels heraus gelöst um die Poren zu kreieren und diese Folie dann anschließend zum Separator verstreckt. In diesem Separator gewährleisten dann auch bei einer starken Überhitzung die anorganische Partikel die Trennung von Anode und Kathode in der Batterie. Dieses Verfahren hat allerdings den Nachteil, dass die Partikel zur Schwächung der mechanischen Eigenschaften des Separators beitragen und zum anderen durch Agglomerate der Partikel Fehler und ungleiche Porenstruktur entstehen kann.

US2007020525 beschreibt einen keramischen Separator, der durch Verarbeitung von anorganischen Partikeln mit einem Polymer basierten Binder erhalten wird. Auch dieser Separator gewährleistet, dass bei einer starken Überhitzung Anode und Kathode in der Batterie getrennt bleiben. Aber das Herstellungsverfahren ist aufwendig und die mechanischen Eigenschaften des Separators unzureichend.

In DE19838800 wird ein elektrischer Separator mit einer Verbundstruktur vorgeschlagen, der ein flächiges, mit einer Vielzahl von Öffnungen versehenes, flexibles Substrat mit einer darauf befindlichen Beschichtung umfasst. Das Material des Substrates ist ausgewählt aus Metallen, Legierungen, Kunststoffen, Glas und Kohlefaser oder einer Kombination solcher Materialien, und die Beschichtung ist eine flächig durchgehende, poröse, elektrisch nicht leitende keramische Beschichtung. Der Einsatz der keramischen Beschichtung verspricht thermische und chemische Beständigkeit. Diese Separatoren sind aber aufgrund des Trägermaterials sehr dick und haben sich in der Herstellung als problematisch erwiesen, da eine fehlerfrei, großflächige Beschichtung nur mit erheblichem technischen Aufwand realisiert werden kann.

In DE10208277 wurde das Gewicht und die Dicke des Separators dadurch reduziert, dass ein Polymervlies eingesetzt wurde, aber auch die dort beschriebenen Ausführungsformen eines Separators genügen noch nicht allen Anforderungen an einen Separator für eine Lithium-Hochenergiebatterie, insbesondere weil in dieser Anmeldung besonderer Wert gelegt wurde auf möglichst große Poren des Separators. Mit den dort beschriebenen, bis zu 5 $\mu$m großen Partikeln ist es aber nicht möglich, 10 bis 40 $\mu$m dicke Separatoren herzustellen, da hier nur einige wenige Partikel übereinander zu liegen kämen. Dadurch würde der Separator zwangsläufig eine große Fehler-und Störstellendichte (z. B. Löcher, Risse, ...) aufweisen.

WO 2005038946 beschreibt einen hitzebeständigen Separator, der aus einem Träger aus gewebten oder ungewebte Polymerfasern aufweist, mit einer auf und in diesem Träger befindlichen porösen anorganischen Keramikschicht die durch einen Kleber mit dem Träger verbunden ist. Auch hier ist die Gewährleistung einer fehlerfreien Beschichtung sowie die resultierende Dicke und Gewicht als problematisch anzusehen.

Die Beschichtung gereckter Polypropylenfolien mit anorganischen Materialien wurde bisher nur wenig verfolgt, da bekannt ist, dass die Haftung von Coatingschichten nur unzureichend ist und deshalb Haftvermittler hinzugezogen werden müssen. Diese Problematik wird z.B. in US4794136 beschrieben. Hier wird der Einsatz eines Melamin/Acrylat-Primers als Haftvermittler zwischen Polyolefinischen Folien und PVDC-Coatings beschrieben. Haftvermittler neigen aber dazu die Poren zu verschließen und so den Widerstand unnötig in die Höhe treiben. Das Abplatzen des Coatings während der Batteriefertigung stellt ein zusätzliches Sicherheitsrisiko dar. Des Weiteren müssen die Haftvermittler in den organischen Elektrolyten, die in Li-Batterien eingesetzt werden unlöslich sein, um u.a. die Leitfähigkeit des Elektrolyten nicht negativ zu beeinflussen.

Es wurde überraschend gefunden, dass Polypropylen Separatoren mit einer bestimmten Oberflächenstruktur ohne Einsatz von Primern selbst gegenüber wasserbasierenden anorganischen, vorzugsweise keramischen, Coatings eine für die Weiterverarbeitung ausreichende Haftung zeigen. Die Haftung gegenüber einer Vielzahl von Coatings ist hier auch ohne den Einsatz eines Primers gegeben.

Polyolefin Separatoren können heute nach verschiedenen Verfahren hergestellt werden: Füllstoffverfahren; Kaltverstreckung, Extraktionsverfahren und $\beta$-Kristallitverfahren. Diese Verfahren unterscheiden sich grundsätzlich durch die verschiedenen Mechanismen, durch welche die Poren erzeugt werden.

Beispielsweise können durch den Zusatz von sehr hohen Füllstoffmengen poröse Folien hergestellt werden. Die Poren entstehen beim Verstrecken durch die Unverträglichkeit der Füllstoffe mit der Polymermatrix. Die großen Füllstoffmengen von bis zu 40 Gew.-%, welche zur Erzielung von hohen Porositäten erforderlich sind, beeinträchtigen jedoch die mechanische Festigkeit trotz hoher Verstreckung erheblich, so dass diese Produkte als Separatoren in einer Hochenergiezelle nicht eingesetzt werden können.

In den sogenannten Extraktionsverfahren werden die Poren im Prinzip durch Herauslösen einer Komponente aus der Polymermatrix durch geeignete Lösemittel erzeugt. Hier haben sich vielfältige Varianten entwickelt, die sich durch Art der Zusatzstoffe und die geeigneten Lösemittel unterscheiden. Es können sowohl organische als auch anorganische Zusatzstoffe extrahiert werden. Diese Extraktion kann als letzter Verfahrensschritt bei der Herstellung der Folie erfolgen oder mit einer anschließenden Verstreckung kombiniert werden. Nachteilig ist in diesem Falle der ökologisch und ökonomisch bedenkliche Extraktionsschritt.

Ein älteres aber erfolgreiches Verfahren beruht auf einer Verstreckung der Polymermatrix bei sehr niedrigen Temperaturen (Kaltverstreckung). Hierzu wird die Folie zunächst extrudiert und anschließend zur Erhöhung des kristallinen Anteils für einige Stunden getempert. Im nächsten Verfahrensschritt erfolgt die KaltVerstreckung in Längsrichtung bei sehr niedrigen Temperaturen, um eine Vielzahl von Fehlstellen in Form kleinster Mikrorisse zu erzeugen. Diese vorgestreckte Folie mit Fehlstellen wird anschließend bei erhöhten Temperaturen mit höheren Faktoren nochmals in die gleiche Richtung verstreckt, wobei die Fehlstellen zu Poren vergrößert werden, die eine netzwerkartige Struktur ausbilden. Diese Folien vereinen hohe Porositäten und gute mechanische Festigkeit in Richtung ihrer Verstreckung, im Allgemeinen die Längsrichtung. Die mechanische Festigkeit in Querrichtung bleibt dabei jedoch mangelhaft, wodurch die Durchstoßfestigkeit schlecht ist und eine hohe Spleißneigung in Längsrichtung entsteht. Insgesamt ist das Verfahren kostenintensiv.

Ein weiteres bekanntes Verfahren zur Herstellung von porösen Folien basiert auf der Zumischung von β-Nukleierungsmitteln zu Polypropylen. Durch das β-Nukleierungsmittel bildet das Polypropylen beim Abkühlen der Schmelze sogenannte β-Kristallite in hohen Konzentrationen. Bei der anschließenden LängsVerstreckung erfolgt eine Umwandlung der β-Phase in die alpha-Modifikation des Polypropylens. Da sich diese unterschiedlichen Kristallformen in der Dichte unterscheiden, entstehen auch hier zunächst viele mikroskopische Fehlstellen, die durch die anschließende Querverstreckung zu Poren aufgerissen werden. Die nach diesem Verfahren hergestellten Folien haben gute Porositäten und gute mechanische Festigkeiten in Längs- und Querrichtung und eine sehr gute Wirtschaftlichkeit. Diese Folien werden nachstehend auch β-poröse Folien genannt. Zur Verbesserung der Porosität kann eine höhere Orientierung in Längsrichtung vor der Querstreckung eingebracht werden. WO2010145770 beschreibt eine Ein- oder mehrschichtige biaxial orientierte, mikroporöse Folie mit Abschaltfunktion, deren Mikroporosität durch Umwandlung von β-kristallinem beim Verstrecken erzeugt wird, und welche mindestens eine Abschaltschicht aus Propylenhomopolymer und Polyethylen enthält und die im Falle einer Überhitzungbereits bei T > 135°C die Porosität verliert, d.h. den lonenstrom von Anode zu Kathode unterbricht.

Die Aufgabe der vorliegenden Erfindung bestand darin, eine poröse Folie, bzw. einen Separator für Batterien zur Verfügung zu stellen, welche über eine Abschaltfunktion im Temperaturbereich von 120-150°C, hohe Porositäten und hervorragende mechanische Festigkeit aufweisen soll und zusätzlich auch die Hitzebeständigkeit der Folie erhöht, so dass diese auch im Falle von starker Überhitzung infolge z.B. interner Kurzschlüsse oder massiver Beschädigung Kathode und Anode trennt und somit auch in Hochenergiebatterien in Automobilen eingesetzt werden können. Des Weiteren soll die Membran durch einfache, umweltschonende und kostengünstige Verfahren herstellbar sein.

Überraschenderweise wurde gefunden, dass anorganisch, vorzugsweise keramisch, beschichtete Separatorfolien auf Basis von porösen Polyolefinfolien herstellbar sind, wenn die anorganische, vorzugsweise keramische, Beschichtung auf eine biaxial orientierte, ein- oder mehrschichtige poröse Folie, deren Porosität durch Umwandlung von β-kristallinem Polypropylen beim Verstrecken der Folie erzeugt wird, welche mindestens eine poröse Schicht umfasst und diese Schicht mindestens ein Propylen- und Polyethylenpolymer und β-Nukleierungsmittel enthält, wobei die Folie vor der Beschichtung einen Gurley Wert von <1000s aufweist, aufgebracht wird.

Gegenstand der vorliegenden Erfindung ist somit eine

(I) biaxial orientierte, ein- oder mehrschichtige poröse Folie, welche mindestens eine poröse Schicht umfasst und diese Schicht mindestens ein Propylenpolymer und Polyethylen enthält,
(II) die Porosität der porösen Folie 30% bis 80% beträgt und
(III) die Durchlässigkeit der porösen Folie <1000s (Gurley Wert) beträgt,
(IV) die poröse Folie eine anorganische, vorzugsweise keramische, Beschichtung aufweist und
(V) die beschichtete poröse Folie einen Gurley Wert von <1500s aufweist und
(VI) die beschichtete poröse Folie einen Gurley Wert von > 6000s aufweist, wenn diese für 5 Minuten über 140°C erhitzt wird, und wobei mindestens ein β-Nukleierungsmittel in der porösen Schicht der Folie vorliegt.

Die erfindungsgemäße anorganisch, vorzugsweise keramisch, beschichtete Separatorfolien auf Basis von porösen Polyolefinfolien umfasst eine poröse, biaxial orientierte Folie aus Polypropylen und Polyethylen (BOPP) mit sehr hohen Porosität und hoher Durchlässigkeit von <1000 s (Gurley Wert). Der Einsatz derartiger BOPP Folien als Separatorfolien ist bereits bekannt und enthalten β-Nukleierungsmittel. Die erfindungsgemäße Porosität der Folie wird durch Umwandlung von β-kristallinem Polypropylen beim Verstrecken der Folie erzeugt, wobei mindestens ein β-Nukleierungsmittel in der Folie vorliegt. Derartige BOPP Folien sind auch für den Einsatz als Separator im Doppelschicht-Kondensatoren (DSK) besonders geeignet.

Die erfindungsgemäß zur Beschichtung eingesetzten Folien weisen nach einer Längsverstreckung eine moderate Orientierung in Längsrichtung auf und werden anschließend in Querrichtung orientiert, so dass sie als BOPP Folie eine hohe Porosität und eine sehr hohe Durchlässigkeit aufweisen und die Spleißneigung in Längsrichtung abgebaut wird. Dabei ist es vorteilhaft, diese Querstreckung mit einer sehr langsamen Streckgeschwindigkeit von vorzugsweise unter 40%/s durchzuführen.

Die erfindungsgemäß zur Beschichtung eingesetzten Folien können ein- oder mehrschichtig aufgebaut sein. Die Herstellung solcher einschichtigen oder mehrschichtigen porösen Polypropylenfolie bei welchem Propylenpolymer und β-Nukleierungsmittel in einem Extruder aufgeschmolzen und durch eine Flachdüse auf eine Abzugswalze extrudiert wird, ist bereits in DE-A-102010018374 detailliert beschrieben. Der Schmelzfilm kühlt auf der Abzugswalze unter Ausbildung von β-Kristalliten ab und verfestigt sich. Anschließend wird diese Folie in Längsrichtung und danach unmittelbar in Querrichtung verstreckt.

Anstelle der unmittelbaren Querverstreckung kann die erfindungsgemäß zur Beschichtung eingesetzten Folien auch nach der Verstreckung in Längsrichtung aufgewickelt werden und zu einem späteren Zeitpunkt in einem zweiten Querstreckverfahren abgewickelt, auf Querstrecktemperatur erwärmt und in Querrichtung verstreckt werden, wobei die Verfahrensgeschwindkeit des Längsstreckverfahrens größer oder kleiner als die Verfahrensgeschwindigkeit des Querstreckverfahrens ist.

Die erfindungsgemäß zur Beschichtung eingesetzten porösen BOPP Folien umfassen mindestens eine poröse Schicht, die aus Propylenpolymeren, Polyethylen polymeren und/oder Propylenblockcopolymeren, aufgebaut ist und β-Nukleierungsmittel enthält. Gegebenenfalls können zusätzlich andere Polyolefine in geringen Mengen enthalten sein, soweit sie die Porosität und andere wesentliche Eigenschaften nicht nachteilig beeinflussen. Des Weiteren enthält die mikroporöse Schicht gegebenenfalls zusätzlich übliche Additive, beispielsweise Stabilisatoren und/oder Neutralisationsmittel in jeweils wirksamen Mengen.

Für die Zwecke dieser Erfindung sind als Polyethylene in der Abschaltschicht HDPE oder MDPE bevorzugt. Im Allgemeinen sind diese Polyethylene wie HDPE und MDPE mit dem Polypropylen unverträglich und bilden im Gemisch mit Polypropylen eine separate Phase. Das Vorliegen einer separaten Phase zeigt sich beispielsweise in einer DSC Messung durch einen separaten Schmelzepeak im Bereich der Schmelztemperatur des Polyethylens, im Allgemeinen in einem Bereich von 115 - 140°C. Das HDPE hat im allgemeinen einen MFI (50 N/190°C) von größer 0,1 bis 50 g/10 min, vorzugsweise 0,6 bis 20 g/10min, gemessen nach DIN 53 735 und eine Viskositätszahl, gemessen nach DIN 53 728, Teil 4, oder ISO 1191, im Bereich von 100 bis 450 $cm^3$/g, vorzugsweise 120 bis 280 $cm^3$/g. Die Kristallinität beträgt 35 bis 80 %, vorzugsweise 50 bis 80 %. Die Dichte, gemessen bei 23°C nach DIN 53 479, Verfahren A, oder ISO 1183, liegt im Bereich von >0,94 bis 0,97 g/$cm^3$. Der Schmelzpunkt, gemessen mit DSC (Maximum der Schmelzkurve, Aufheizgeschwindigkeit 20°C/min), liegt zwischen 120 und 145°C, vorzugsweise 125 - 140°C. Geeignetes MDPE hat im Allgemeinen einen MFI (50 N/190CC) von größer 0,1 bis 50 g/10 min, vorzugsweise 0,6 bis 20 g/10min, gemessen nach DIN 53 735. Die Dichte, gemessen bei 23°C nach DIN 53 479, Verfahren A, oder ISO 1183, liegt im Bereich von >0,925 bis 0,94 g/$cm^3$. Der Schmelzpunkt, gemessen mit DSC (Maximum der Schmelzkurve, Aufheizgeschwindigkeit 20°C/min), liegt zwischen 115 und 130°C, vorzugsweise 120 - 125°C.

Zusätzlich ist es erfindungsvorteilhaft, dass das Polyethylen ein engen Schmelzbereich aufweist. Dies bedeutet, dass in einem DSC des Polyethylens der Beginn des Schmelzebereiches und das Ende des Schmelzebereiches maximal 10K, vorzugsweise 3 bis 8K auseinander liegen. Als Beginn des Schmelzebereiches gilt hier der extrapolierte Onset, das Ende des Schmelzebereiches ist entsprechend das extrapolierte Ende der Schmelzkurve (Aufheizgeschwindigkeit 10K/min).

Dass die Abschaltfunktion bildende Polyethylene ist in der erfindungsgemäßen zur Beschichtung eingesetzten porösen BOPP Folien vorzugsweise in Mengen von mindestens 5 Gew.-% bezogen auf die vorhandenen Propylenpolymeren und/oder Propylenblockcopolymeren vorhanden, besonders bevorzugt in Mengen von mindestens 10 Gew.-%.

Geeignete Propylenhomopolymeren enthalten 98 bis 100 Gew.-%, vorzugsweise 99 bis 100 Gew.-% Propyleneinheiten und besitzen einen Schmelzpunkt (DSC) von 150°C oder höher, vorzugsweise 155 bis 170°C, und im allgemeinen einen Schmelzflußindex von 0,5 bis 10 g/10 min, vorzugsweise 2 bis 8 g/10 min, bei 230°C und einer Kraft von 2,16 kg (DIN 53735). Isotaktische Propylenhomopolymere mit einem n-heptan löslichen Anteil von unter 15 Gew.-%, vorzugsweise 1 bis 10 Gew.-%, stellen bevorzugte Propylenhomopolymere für die Schicht dar. Vorteilhaft können auch isotaktische Propylenhomopolymere mit einer hohen Kettenisotaktizität von mindestens 96%, vorzugsweise 97 - 99% ($^{13}$C-NMR; Triaden Methode) eingesetzt werden. Diese Rohstoffe sind als HIPP (Hoch isotaktische Polypropylene) oder HCPP (Hoch Kristalline Polypropylene) Polymere im Stand der Technik bekannt und zeichnen sich durch eine hohe Stereoregularität der Polymerketten, höhere Kristallinität und einen höheren Schmelzpunkt aus (im Vergleich zu Propylenpolymeren mit einer $^{13}$C-NMR-Isotaktizität von 90 bis <96%, die gleichfalls eingesetzt werden können).

Die Parameter "Schmelzpunkt" und "Schmelzebereich" werden mittels DSC-Messung bestimmt und aus der DSC-Kurve, wie bei den Meßmethoden beschrieben, ermittelt.

Gegebenenfalls kann die poröse Schicht zusätzlich andere Polyolefine enthalten, soweit sie die Eigenschaften, insbesondere die Porosität und die mechanischen Festigkeiten, nicht negativ beeinflussen. Andere Polyolefine sind beispielsweise statistische Copolymere von Ethylen und Propylen mit einem Ethylengehalt von 20 Gew.-% oder weniger, statistische Copolymere von Propylen mit $C_4$-$C_8$-Olefinen mit einem Olefingehalt von 20 Gew.-% oder weniger, Terpolymere von Propylen, Ethylen und Butylen mit einem Ethylengehalt von 10 Gew.-% oder weniger und mit einem Butylengehalt von 15 Gew.-% oder weniger,

In einer bevorzugten Ausführungsform ist die poröse Schicht nur aus Polyethylenpolymeren, Propylenhomopolymer und/oder Propylenblockcopolmyer und β-Nukleierungsmittel, sowie gegebenenfalls Stabilisator und Neutralisationsmittel aufgebaut. Auch hier sind vorzugsweise mindestens 5 Gew.-%, besonders bevorzugt mindestens 10 Gew.-%, Polyethylene anwesend.

Propylen-Blockcopolymere haben einen Schmelzpunkt von über 140 bis 170°C, vorzugsweise von 145 bis 165°C, insbesondere 150 bis 160°C und einen Schmelzebereich der bei über 120°C, vorzugsweise in einem Bereich von 125 - 140°C beginnt. Der Comonomer-, vorzugsweise Ethylen-Gehalt liegt beispielsweise zwischen 1 und 20 Gew.-%, bevorzugt 1 und 10 Gew.-%. Der Schmelzflußindex der Propylen-Blockcopolymere liegt im Allgemeinen in einem Bereich von 1 bis 20 g/10min, vorzugsweise 1 bis 10 g/10min.

In einer bevorzugten Ausführungsform umfasst die erfindungsgemäß zur Beschichtung eingesetzte poröse BOPP Folien keine Polyolefine, die Mittels sogenannter Metallocen-Katalysatoren hergestellt wurden.

Als β-Nukleierungsmittel sind für die poröse Schicht grundsätzlich alle bekannten Zusatzstoffe geeignet, welche die Bildung von β-Kristallen des Polypropylens beim Abkühlen einer Polypropylenschmelze fördern. Derartige β-Nukleierungsmittel, als auch ihre Wirkungsweise in einer Polypropylenmatrix, sind an sich im Stand der Technik bekannt und werden nachstehend im Einzelnen beschrieben.

Von Polypropylen sind verschiedene kristalline Phasen bekannt. Beim Abkühlen einer Schmelze bildet sich üblicherweise überwiegend das α-kristalline PP, dessen Schmelzpunkt im Bereich von 155 - 170°C, vorzugsweise 158 - 162 °C liegt. Durch eine bestimmte Temperaturführung kann beim Abkühlen der Schmelze ein geringer Anteil an β-kristalliner Phase erzeugt werden, welche gegenüber der monoklinen α-Modifikation mit 145 - 152°C, vorzugsweise 148 - 150°C einen deutlich niedrigeren Schmelzpunkt aufweist. Im Stand der Technik sind Additive bekannt, die zu einem erhöhten Anteil der β-Modifikation beim Abkühlen des Polypropylens führen, beispielsweise γ-Quinacridone, Dihydroquinacridine oder Calciumsalze der Phthalsäure.

Für die Zwecke der vorliegenden Erfindung werden vorzugsweise hochaktive β-Nukleierungsmittel eingesetzt, welche beim Abkühlen einer Propylenhomopolymerschmelze einen β-Anteil von 40-95%, vorzugsweise von 50-85% (DSC) erzeugen. Der β-Anteil wird aus dem DSC der abgekühlten Propylenhomopolymerschmelze bestimmt. Bevorzugt ist beispielsweise ein zweikomponentiges β-Nukleierungssystem aus Calciumcarbonat und organischen Dicarbonsäuren, welches in der DE 3610644 beschrieben ist, worauf hiermit ausdrücklich Bezug genommen wird. Besonders vorteilhaft sind Calciumsalze der Dicarbonsäuren, wie Calciumpimelat oder Calciumsuberat wie in DE 4420989 beschrieben, auf die ebenfalls ausdrücklich Bezug genommen wird. Auch die in EP-0557721 beschriebenen Dicarboxamide, insbesondere N,N-Dicyclohexyl-2,6-Naphtalendicarboxamide, sind geeignete β-Nukleierungsmittel.

Zusätzlich zu den β-Nukleierungsmitteln ist die Einhaltung eines bestimmten Temperaturbereiches und Verweilzeiten bei diesen Temperaturen beim Abkühlen des unverstreckten Schmelzefilms für die Erzielung eines hohen Anteils an β-kristallinem Polypropylen wichtig. Die Abkühlung des Schmelzefilms erfolgt vorzugsweise bei einer Temperatur von 60 bis 140°C, insbesondere 80 bis 130°C, beispielsweise 85 bis 128°C. Eine langsame Abkühlung fördert das Wachstum der β-Kristallite ebenfalls, daher sollte die Abzugsgeschwindigkeit, d.h. die Geschwindigkeit mit welcher der Schmelzefilm über die erste Kühlwalze läuft, langsam sein, damit die notwendigen Verweilzeiten bei den gewählten Temperaturen ausreichend lange sind. Die Abzugsgeschwindigkeit beträgt vorzugsweise weniger als 25 m/min, insbesondere 1 bis 20 m/min. Die Verweilzeit beträgt im Allgemeinen 20 bis 300s; vorzugsweise 30 bis 200s.

Als weitere Komponente kann die Abschaltschicht I und die poröse Schicht II jeweils zusätzlich ein Propylen-Blockcopolymer enthalten. Derartige Propylen-Blockcopolymere haben einen Schmelzpunkt von über 140 bis 170°C, vorzugsweise von 150 bis 165°C, insbesondere 150 bis 160°C und einen Schmelzebereich der bei über 120°C, vorzugsweise in einem Bereich von 125 - 140°C beginnt. Der Comonomer-, vorzugsweise Ethylen-Gehalt liegt beispielsweise zwischen 1 und 20 Gew.-%, bevorzugt 1 und 10 Gew.-%. Der Schmelzflußindex der Propylen-Blockcopolymere liegt im Allgemeinen in einem Bereich von 1 bis 20 g/10min, vorzugsweise 1 bis 10 g/10min.

Gegebenenfalls können sowohl die Abschaltschicht I als auch die poröse Schicht II zusätzlich zu dem Propylenhomopolymeren und Propylenblockcopolymeren andere Polyolefine enthalten, soweit sie die Eigenschaften, insbesondere die Porosität und die mechanischen Festigkeiten und die Abschaltfunktion, nicht negativ beeinflussen. Andere Polyolefine sind beispielsweise statistische Copolymere von Ethylen und Propylen mit einem Ethylengehalt von 20 Gew.-% oder weniger, statistische Copolymere von Propylen mit $C_4$-$C_8$-Olefinen mit einem Olefingehalt von 20 Gew.-% oder weniger, Terpolymere von Propylen, Ethylen und Butylen mit einem Ethylengehalt von 10 Gew.-% oder weniger und mit einem Butylengehalt von 15 Gew.-% oder weniger, oder andere Polyethylene, wie LDPE, VLDPE, und LLDPE.

Besonders bevorzugte Ausführungsformen der erfindungsgemäßen porösen Folie enthalten 50 bis 10.000ppm, vorzugsweise 50 bis 5000ppm, insbesondere 50 bis 2000ppm Calcium-Pimelat oder Calcium-Suberat als β-Nukleierungsmittel in der porösen Schicht.

Die poröse Folie kann ein oder mehrschichtig sein. Die Dicke der Folie liegt im Allgemeinen in einem Bereich von 10 bis 100 μm, vorzugsweise 15 bis 60 μm, beispielsweise 15 bis 40μm. Die poröse Folie kann auf ihrer Oberfläche mit einer Corona, Flamm- oder Plasmabehandlung versehen werden, um die Befüllung mit Elektrolyten zu verbessern.

In einer mehrschichtigen Ausführungsform umfasst die Folie weitere poröse Schichten, welche wie vorstehend beschrieben aufgebaut sind, wobei die Zusammensetzung der verschiedenen porösen Schicht nicht unbedingt identisch sein muss. Für mehrschichtige Ausführungsformen beträgt die Dicke der einzelnen Schichten im allgemeinen 2 bis 50μm.

Die Dichte der zu beschichtenden porösen Folie liegt im Allgemeinen in einem Bereich von 0,1 bis 0,6 g/cm³, vorzugsweise 0,2 bis 0,5 g/cm³.

Der Bubble Point der zu beschichtenden Folie sollte nicht über 350nm, vorzugsweise im Bereich von 20 bis 350, insbesondere von 40 bis 300, besonders bevorzugt 50 bis 300nm liegen und der mittlere Porendurchmesser sollte im Bereich 50 bis 100 nm, bevorzugt im Bereich 60 - 80 nm liegen.

Die Porosität der zu beschichtenden porösen Folie liegt im Allgemeinen in einem Bereich von 30 % bis 80%, vorzugsweise 50% bis 70%.

Die zu beschichtende poröse Folie, insbesondere die poröse BOPP Folie hat eine definierte Rauigkeit Rz (ISO 4287, Rauheitsmessung eine Linie, Amplituden-Parameter Rauheitsprofil, Gerät Leica DCM3D, Gauss-Filter, 0.25mm) von vorzugsweise 0,3 μm bis 6μm, besonders bevorzugt 0,5 bis 5μm, insbesondere 0,5 bis 3,5μm.

Keramische Beschichtung

Die erfindungsgemäße biaxial orientierte, ein- oder mehrschichtige poröse Folie weist zumindest auf einer Seite der Oberfläche eine keramische Beschichtung auf.

Die Beschichtung ist elektrisch isolierend.

Die erfindungsgemäße anorganische, vorzugsweise keramische, Beschichtung umfasst keramische Partikel, worunter auch anorganische Partikel verstanden werden. Die Partikelgröße ausgedrückt als D50 Wert liegt im Bereich zwischen 0,05 und 15μm, vorzugweise im Bereich 0,1 bis 10μm. Die Auswahl der genauen Partikelgröße erfolgt in Abhängigkeit von der Dicke der anorganischen, vorzugsweise keramischen, Beschichtung. Hier hat sich gezeigt, dass der D50 Wert nicht größer sein sollte als 50% der Dicke der anorganischen, vorzugsweise keramischen, Beschichtung, vorzugsweise nicht größer sein sollte als 33% der Dicke der anorganischen, vorzugsweise keramischen, Beschichtung, insbesondere nicht größer sein sollte als 25% der Dicke der anorganischen, vorzugsweise keramischen, Beschichtung. In einer besonders bevorzugten Ausführungsform der Erfindung ist der D90 Wert nicht größer als 50% der Dicke der anorganischen, vorzugsweise keramischen, Beschichtung, vorzugsweise nicht größer als 33% der Dicke der anorganischen, vorzugsweise keramischen, Beschichtung, insbesondere nicht größer als 25% der Dicke der anorganischen, vorzugsweise keramischen, Beschichtung.

Als anorganische, vorzugsweise keramische, Partikel im Sinne der vorliegenden Erfindung werden alle natürlichen oder synthetischen Mineralien verstanden, sofern sie die vorstehend genannten Partikelgrößen aufweisen. Die anorganischen, vorzugsweise keramischen, Partikel unterliegen hinsichtlich der Partikelgeometrie keiner Einschränkung, bevorzugt sind jedoch sphärische Partikel. Des Weiteren können die anorganischen, vorzugsweise keramischen, Partikel kristallin, teilkristallin (min. 30% Kristallinität) oder nicht-kristallin vorliegen.

Als keramische Partikel im Sinne der vorliegenden Erfindung werden Materialien auf Basis von Silikat-Rohstoffen, oxidische Rohstoffe, insbesondere Metalloxide, und/oder nicht-oxidische und nicht-metallische Rohstoffe verstanden.

Geeignete Silikat-Rohstoffen umfassen Materialien die einen SiO4-Tetraeder aufweisen, beispielsweise Schicht- oder Gerüst-Silikate.

Geeignete oxidische Rohstoffe, insbesondere Metalloxide, sind beispielweise Aluminiumoxide, Zirkonoxide, Bariumtitanat, Bleizirkoniatitanate, Ferrite und Zinkoxid.

Geeignete nicht-oxidische und nicht-metallische Rohstoffe sind beispielweise Siliziumcarbid, Siliziumnitrid, Aluminiumnitrid, Bornitrid, Titanborid und Molybdänsilicid.

Die erfindungsgemäß eingesetzten Partikel bestehen aus elektrisch isolierenden Materialien, bevorzugt ein nicht elektrisch leitendes Oxid der Metalle Al, Zr, Si, Sn, Ti und/oder Y. Die Herstellung solcher Partikel ist beispielsweise in DE-A-10208277 detailliert beschrieben.

Innerhalb der anorganischen, vorzugsweise keramischen, Partikel sind insbesondere Partikel auf Basis von Oxiden des Siliciums mit der Summenformel $SiO_2$, sowie gemischte Oxide mit der Summenformel $AlNaSiO_2$ und Oxide des Titans mit der Summenformel $TiO_2$ bevorzugt, wobei diese in kristalliner, amorpher oder gemischter Form vorliegenden können. Bevorzugt sind die anorganischen, vorzugsweise keramischen, Partikel polykristalline Materialien, insbesondere solche deren Kristallinität mehr als 30% beträgt.

Die erfindungsgemäße anorganische, vorzugsweise keramische, Beschichtung weist vorzugsweise eine Dicke

von 0,5μm bis 80μm auf, insbesondere 1μm bis 40μm.

Die Auftragsmenge an anorganischer, vorzugsweise keramischer, Beschichtung beträgt vorzugsweise 0,5g/m² bis 80g/m², insbesondere 1g/m² bis 40g/m², bezogen auf Binder plus Partikel nach Trocknung.

Die Auftragsmenge an anorganischen, vorzugsweise keramischen, Partikeln beträgt vorzugsweise 0,4g/m² bis 60g/m², insbesondere 0,9g/m² bis 35g/m², bezogen auf Partikel nach Trocknung.

Die erfindungsgemäße anorganische, vorzugsweise keramische, Beschichtung umfasst anorganische, vorzugsweise keramische, Partikel die vorzugsweise eine Dichte im Bereich von 1,5 bis 5 g/cm³, vorzugsweise 2 bis 4,5 g/cm³, aufweisen.

Die erfindungsgemäße anorganische, vorzugsweise keramische, Beschichtung umfasst anorganische, vorzugsweise keramische, Partikel die vorzugsweise eine Härte von min. 2 auf der Moh's Skala aufweisen.

Die erfindungsgemäße anorganische, vorzugsweise keramische, Beschichtung umfasst anorganische, vorzugsweise keramische, Partikel die vorzugsweise eine Schmelztemperatur von mindestens 160°C, insbesondere mindestens 180°C, ganz besonders bevorzugt mindestens 200°C, aufweisen. Darüber hinaus sollen die genannten Partikel bei den genannten Temperaturen auch keine Zersetzung erfahren. Die vorgenannten Angaben können mittels bekannter Methoden, z.B. DSC (Differential Scanning Calorimetrie) oder TG (Thermogravimetrie) bestimmt werden.

Die erfindungsgemäße anorganische, vorzugsweise keramische, Beschichtung umfasst anorganische, vorzugsweise keramische, Partikel die vorzugsweise eine Druckfestigkeit von min. 100kPa, besonders bevorzugt von min. 150kPa, insbesondere von min. 250kPa, aufweisen. Druckfestigkeit bedeutet, dass min. 90% der vorhandenen Partikel durch den einwirkenden Druck nicht zerstört wurden.

Bevorzugt sind Beschichtungen die eine Dicke von 0,5μm bis 80μm und anorganische, vorzugsweise keramische, Partikel im Bereich zwischen 0,05 und 15μm (d50 Wert), vorzugweise im Bereich 0,1 bis 10μm (d50 Wert), aufweisen.

Besonders bevorzugt sind Beschichtungen die (i) eine Dicke von 0,5μm bis 80μm, (ii) anorganische, vorzugsweise keramische, Partikel im Bereich zwischen 0,05 und 15μm (d50 Wert), vorzugweise im Bereich 0,1 bis 10μm (d50 Wert), aufweisen, deren Druckfestigkeit min. 100kPa, besonders bevorzugt von min. 150kPa, insbesondere min. 250kPa, beträgt.

Besonders bevorzugt sind Beschichtungen die (i) eine Dicke von 0,5μm bis 80μm, (ii) anorganische, vorzugsweise keramische, Partikel im Bereich zwischen 0,05 und 15μm (d50 Wert), vorzugweise im Bereich 0,1 bis 10μm (d50 Wert), aufweisen, deren Druckfestigkeit min. 100kPa, besonders bevorzugt von min. 150kPa, insbesondere min. 250kPa, beträgt und der D50 Wert nicht größer als 50% der Dicke der anorganischen, vorzugsweise keramischen, Beschichtung ist, vorzugsweise nicht größer als 33% der Dicke der anorganischen, vorzugsweise keramischen, Beschichtung, insbesondere nicht größer als 25% der Dicke der anorganischen, vorzugsweise keramischen, Beschichtung.

Die erfindungsgemäße anorganische, vorzugsweise keramische, Beschichtung umfasst neben den genannten anorganischen, vorzugsweise keramischen, Partikeln noch mindestens einen endverfestigten Binder ausgewählt aus der Gruppe der Binder auf Basis von Polyvinylendichlorid (PVDC), Polyacrylate, Polymethacrylate, Polyethylenimine, Polyester, Polyamide, Polyimide, Polyurethane, Polycarbonate, Silikatbinder, gegraftete Polyolefine, Polymere aus der Klasse der halogenierten Polymere, beispielsweise PTFE, und Gemische derselben, auf.

Die erfindungsgemäß eingesetzten Binder sollten elektrisch isolierend sein, d.h. keine elektrische Leitfähigkeit aufweisen. Elektrisch isolierend bzw. keine elektrische Leitfähigkeit bedeutet, dass diese Eigenschaften in geringem Umfang vorhanden sein können, aber die Werte für die unbeschichtete Folie nicht erhöhen.

Die Auftragsmenge an endverfestigtem Binder ausgewählt aus der Gruppe der Binder auf Basis von Polyvinylendichlorid (PVDC), Polyacrylate, Polymethacrylate, Polyethylenimine, Polyester, Polyamide, Polyimide, Polyurethane, Polycarbonate, Silikatbinder, gegraftete Polyolefine, Polymere aus der Klasse der halogenierten Polymere, beispielsweise PTFE, und Gemische derselben, beträgt vorzugsweise 0,05g/m² bis 20g/m², insbesondere 0,1g/m² bis 10g/m². [nur Binder, getrocknet]. Bevorzugte Bereich für Binder auf Basis von Polyvinylendichlorid (PVDC) sind 0,05g/m² bis 20g/m², vorzugsweise 0,1g/m² bis 10g/m². [nur Binder, getrocknet]

Die erfindungsgemäße anorganische, vorzugsweise keramische, Beschichtung umfasst, bezogen auf Binder und anorganische, vorzugsweise keramische, Partikel in getrocknetem Zustand, 98 Gew.-% bis 50 Gew.-% anorganische, vorzugsweise keramische, Partikel und 2 Gew.-% bis 50 Gew.-% Binder ausgewählt aus der Gruppe der Binder auf Basis von Polyvinylendichlorid (PVDC), Polyacrylate, Polymethacrylate, Polyethylenimine, Polyester, Polyamide, Polyimide, Polyurethane, Polycarbonate, Silikatbinder, gegraftete Polyolefine, Polymere aus der Klasse der halogenierten Polymere, beispielsweise PTFE, und Gemische derselben, wobei innerhalb der Binder endverfestigte Binder auf Basis von Polyvinylendichlorid (PVDC) bevorzugt sind. Des Weiteren kann die erfindungsgemäße anorganische, vorzugsweise keramische, Beschichtung noch in geringem Umfang Additive aufweise, die zur Handhabung der Dispersion notwendig sind.

Die erfindungsgemäße anorganische, vorzugsweise keramische, Beschichtung wird mittels bekannter Technologien, beispielsweise durch Rakeln oder Aufsprühen, auf die poröse BOPP Folie aufgetragen. Bevorzugt wird die anorganische, vorzugsweise keramische, Beschichtung als Dispersion aufgetragen. Diese Dispersionen liegend vorzugsweise als wässrige Dispersionen vor und umfassen neben den erfindungsgemäßen anorganischen, vorzugsweise keramischen, Partikeln, mindestens einen der genannten Binder, vorzugsweise Binder auf Basis von Polyvinylendichlorid (PVDC), Wasser und gegebenenfalls organische Substanzen, welche die Dispersionsstabilität verbessern oder die Benetzbarkeit zur porösen BOPP Folie erhöhen. Bei den organischen Substanzen handelt es sich um flüchtige organische Substanzen, wie ein oder mehrwertige Alkohole, insbesondere um solche, deren Siedetemperatur 140°C nicht übersteigt. Aufgrund der Verfügbarkeit sind Isopropanol, Propanol und Ethanol besonders bevorzugt.

Der Auftrag der anorganischen, vorzugsweise keramischen, Partikel ist beispielsweise in DE-A-10208277 detailliert beschrieben.

Bevorzugte Dispersionen umfassen:

(i) 20 Gew.-% bis 90 Gew.-%, besonders bevorzugt 30 Gew.-% bis 80 Gew.-% an anorganischen, vorzugsweise keramischen, Partikeln,

(ii) 1 Gew.-% bis 30 Gew.-%, besonders bevorzugt 1,5 Gew.-% bis 20 Gew.-% Binder ausgewählt aus der Gruppe der Binder auf Basis von Polyvinylendichlorid (PVDC), Polyacrylate, Polymethacrylate, Polyethylenimine, Polyester, Polyamide, Polyimide, Polyurethane, Polycarbonate, Silikatbinder, gegraftete Polyolefine, Polymere aus der Klasse der halogenierten Polymere, beispielsweise PTFE, und Gemische derselben, wobei innerhalb der Binder endverfestigte Binder auf Basis von Polyvinylendichlorid (PVDC) bevorzugt sind,

(iii) gegebenenfalls 1Gew.-% bis 30Gew.-%, besonders bevorzugt 0,01Gew.-% bis 0,5 Gew.-% organische Substanzen, welche die Dispersionsstabilität verbessern oder die Benetzbarkeit zur porösen BOPP Folie erhöhen, insbesondere ein oder mehrwertige Alkohole,

(iv) gegebenenfalls 0,00001 Gew.-% bis 10 Gew.-%, besonders bevorzugt 0,001 Gew.-% bis 5 Gew.-% an weiteren Additiven, wie Dispersionsstabilisatoren und/oder Entschäumer,

(v) Wasser, so dass die Summe aller Komponenten 100 Gew.-% ergibt.

Die vorliegende Erfindung betrifft weiterhin ein Verfahren zur Herstellung der erfindungsgemäßen anorganisch, vorzugsweise keramisch, beschichteten porösen BOPP Folie. Nach diesem Verfahren wird die poröse Folie nach dem an sich bekannten Flachfolien-Extrusions- oder -Coextrusionsverfahren hergestellt. Im Rahmen dieses Verfahrens wird so vorgegangen, dass die Mischung aus Propylenhomopolymer und/oder Propylenblockcopolymer, Polyethylen und β-Nukleierungsmittel und gegebenenfalls weiteren Polymeren der jeweiligen Schicht vermischt, in einem Extruder aufgeschmolzen und, gegebenenfalls gemeinsam und gleichzeitig, durch eine Flachdüse auf eine Abzugswalze extrudiert oder coextrudiert wird/werden, auf der sich der ein- oder mehrschichtige Schmelzefilm unter Ausbildung der β-Kristallite verfestigt und abkühlt. Die Abkühltemperaturen und Abkühlzeiten werden so gewählt, dass ein möglichst hoher Anteil an βkristallinem Polypropylen in der Vorfolie entsteht. Im Allgemeinen beträgt diese Temperatur der Abzugswalze oder der Abzugswalzen 60 bis 140°C, vorzugsweise 80 bis 130°C. Die Verweilzeit bei dieser Temperatur kann variieren und sollte mindestens 20 bis 300s, vorzugsweise 30 bis 100s betragen. Die so erhaltene Vorfolie enthält im allgemeinen einen Anteil an β-Kristalliten von 40 - 95%, vorzugsweise 50 - 85%.

Diese Vorfolie mit einem hohen Anteil an β-kristallinem Polypropylen wird anschließend derart biaxial gestreckt, dass es bei der Verstreckung zu einer Umwandlung der β-Kristallite in α-kristallines Polypropylen und zur Ausbildung einer netzwerkartigen porösen Struktur kommt. Die biaxiale Streckung (Orientierung) wird im Allgemeinen aufeinanderfolgend durchgeführt werden, wobei vorzugsweise zuerst längs (in Maschinenrichtung) und dann quer (senkrecht zur Maschinenrichtung) gestreckt wird.

Für die Verstreckung in Längsrichtung wird die abgekühlte Vorfolie zunächst über eine oder mehrere Aufheizwalzen geführt, welche die Folie auf die geeignete Temperatur erwärmen. Im Allgemeinen beträgt diese Temperatur weniger als 140°C, vorzugsweise 70 bis 120°C. Das Längsstrecken erfolgt dann im Allgemeinen mit Hilfe zweier entsprechend dem angestrebten Streckverhältnis verschieden schnellaufender Walzen. Das Längs-Streckverhältnis liegt dabei in einem Bereich von 2:1 bis 6:1, vorzugsweise 3:1 bis 5:1. Zur Vermeidung einer zu hohen Orientierung in Längsrichtung wird der Breiteneinsprung beim Längsstrecken gering gehalten, beispielsweise durch die Einstellung eines vergleichsweise engen Streckspaltes. Die Länge des Streckspaltes beträgt im Allgemeinen 3 bis 100mm, vorzugsweise 5 bis 50mm. Gegebenenfalls können auch fixierende Elemente, wie Breithalter zu einem geringen Breiteneinsprung beitragen. Der Einsprung sollte unter 10%, vorzugsweise 0,5 - 8%, insbesondere 1 - 5% betragen.

Nach dieser Längsverstreckung wird die Folie zunächst wieder über entsprechend temperierte Walzen abgekühlt. Anschließend erfolgt in den sogenannten Aufheizfeldern wieder eine Erwärmung auf die Querstrecktemperatur, die im Allgemeinen bei einer Temperatur von 120 -145°C liegt. Anschließend erfolgt das Querstrecken mit Hilfe eines entsprechenden Kluppenrahmens, wobei das Querstreckverhältnis in einem Bereich von 2:1 bis 9:1, vorzugsweise 3:1 - 8:1 liegt. Zur Erzielung der erfindungsgemäß hohen Porositäten erfolgt die Querstreckung mit einer moderaten bis langsamen Querstreckgeschwindigkeit von >0 bis 40%/s, vorzugsweise in einem Bereich von 0,5 bis 30%/s, insbesondere 1 bis 15%/s.

Gegebenenfalls kann nach der letzten Streckung, im Allgemeinen die Querstreckung, eine Oberfläche der Folie nach einer der bekannten Methoden corona-, plasma- oder flammbehandelt werden, sodass die Befüllung mit Elektrolyt begünstigt wird. Hierbei handelt es sich vorzugsweise um die Oberfläche der Folie, die nachfolgend nicht beschichtet wird.

Abschließend erfolgt gegebenenfalls eine Thermofixierung (Wärmebehandlung), bei welcher die Folie etwa 5 bis 500s, vorzugsweise 10 bis 300s lang bei einer Temperatur von 110 bis 150°C, vorzugsweise bei 125 bis 145°C gehalten wird, beispielsweise über Walzen oder einen Luftheizkasten. Gegebenenfalls wird die Folie unmittelbar vor oder während der Thermofixierung konvergierend gefahren, wobei die Konvergenz vorzugsweise 5 - 25%, insbesondere 8 bis 20% beträgt. Unter Konvergenz versteht man ein leichtes Zusammenfahren des Querstreckrahmens, so dass die maximale Breite des Rahmens die am Ende des Querstreckprozeßes gegeben ist größer als die Breite am Ende der Thermofixierung ist. Entsprechendes gilt selbstverständlich für die Breite der Folienbahn. Der Grad des Zusammenlaufens des Querstreckrahmens wird als Konvergenz angegeben, die aus der maximalen Breite des Querstreckrahmens $B_{max}$ und der Endfolienbreite $B_{Folie}$ nach der folgenden Formel berechnet wird:

$$\text{Konvergenz } [\%] = 100 \times (B_{max} - B_{Folie}) / B_{max}$$

Abschließend wird die Folie in üblicher Weise mit einer Aufwickeleinrichtung aufgewickelt.

In den bekannten sequentiellen Verfahren, bei denen Längs- und Querstreckung nacheinander in einem Verfahren durchgeführt werden, hängt nicht nur die Querstreckgeschwindigkeit von der Verfahrensgeschwindigkeit ab. Auch die Abzugsgeschwindigkeit und die Abkühlgeschwindigkeit variieren mit der Verfahrensgeschwindigkeit. Diese Parameter können somit nicht unabhängig voneinander gewählt werden. Daraus folgt, dass sich -bei ansonsten gleichen Bedingungen- bei einer langsameren Verfahrensgeschwindigkeit nicht nur die Querstreckgeschwindigkeit reduziert, sondern auch die Abkühl- bzw. Abzugsgeschwindigkeit der Vorfolie. Dies kann, muss aber nicht zwangsläufig, ein zusätzliches Problem darstellen.

In einer weiteren Ausführungsform des erfindungsgemäßen Verfahrens ist es daher vorteilhaft das Verfahren zur Herstellung der sequentiell verstreckten Folie in zwei separate Verfahren aufzuteilen, d.h. in ein erstes Verfahren, welches alle Verfahrensschritte bis einschließlich Abkühlung nach Längsstreckung umfasst, nachstehend Längsstreckverfahren genannt und in ein zweites Verfahren, welches alle Verfahrensschritte nach dem Längsstreckverfahren umfasst, nachstehend Querstreckverfahren genannt. Diese Ausführungsform des erfindungsgemäßen Verfahrens als zweistufiges Verfahren ermöglicht es die Verfahrensgeschwindigkeit des ersten Verfahrens, und damit die jeweiligen Bedingungen, insbesondere Abkühl- und Abzugsgeschwindigkeiten, sowie die Längsstreckbedingungen unabhängig von der Querstreckgeschwindigkeit zu wählen. Entsprechend kann in dem zweiten Querstreckverfahren die Querstreckgeschwindigkeit beliebig verlangsamt werden, beispielsweise durch Reduzierung der Verfahrensgeschwindigkeit oder durch die Verlängerung des Streckrahmens, ohne dass die Bildung der β-Kristallite oder die Längsstreckbedingungen negativ beeinflusst werden. Diese Verfahrensvariante wird umgesetzt indem man das Längsstreckverfahren wie vorstehend beschrieben ausführt und nach der Abkühlung der längsgestreckten Folie diese Folie zunächst aufwickelt. Diese längsverstreckte Folie wird dann im zweiten Querstreckverfahren verwendet, d.h. in diesem zweiten Verfahren erfolgen alle Verfahrensschritte nach Abkühlung der längsgestreckten Folie wie vorstehend beschrieben. Hierbei kann jetzt die optimale Querstreckgeschwindigkeit unabhängig gewählt werden.

Unter den vorstehend genannten Verfahrensgeschwindigkeiten des Längsstreckverfahrens oder des Querstreckverfahrens oder des sequentiellen Verfahrens wird jeweils diejenige Geschwindigkeit, z.B. in m/min, verstanden, mit der die Folie bei der jeweils abschließenden Aufwickelung läuft. Je nach den Gegebenheiten kann beim Querstreckverfahren sowohl eine schneller als auch eine langsamere Verfahrensgeschwindigkeit als beim Längsstreckverfahren vorteilhaft sein.

Die Verfahrensbedingungen bei dem erfindungsgemäßen Verfahren zur Herstellung der porösen Folien unterscheiden sich von den Verfahrensbedingungen, die üblicherweise bei der Herstellung einer biaxial orientierten Folie eingehalten werden. Für die Erzielung einer hohen Porosität und Durchlässigkeit sind sowohl die Abkühlbedingungen bei der Verfestigung zur Vorfolie, als auch die Temperaturen und die Faktoren bei der Verstreckung kritisch. Zunächst muß durch entsprechend langsame und moderate Abkühlung, d.h. bei vergleichsweise hohen Temperaturen, ein hoher Anteil an β-Kristalliten in der Vorfolie erzielt werden. Bei der anschließenden Längsverstreckung werden die β-Kristalle in die alpha Modifikation umgewandelt, wodurch Störstellen in Form von Mikrorissen entstehen. Damit diese Störstellen in ausreichender Anzahl und in der richtigen Form entstehen muss die Längsstreckung bei vergleichsweise niedrigen Temperaturen erfolgen. Bei der Querstreckung, werden diese Störstellen zu Poren aufgerissen, so dass die charakteristische Netzwerkstruktur dieser porösen Folien entsteht.

Diese, gegenüber herkömmlichen boPP Prozessen niedrigen Temperaturen, insbesondere bei der Längsstreckung, bedingen hohe Streckkräfte, die zum einen eine hohe Orientierung in die Polymermatrix einbringen und zum anderen die Abrißgefahr erhöhen. Je höher die gewünschte Porosität, umso niedriger müssen die Temperaturen bei der Verstreckung gewählt werden und umso höher müssen die Streckfaktoren sein. Der Prozess wird daher grundsätzlich umso kritischer je höher die Porosität und Durchlässigkeit der Folie sein soll. Die Porosität kann daher über höhere Streckfaktoren oder Erniedrigung der Strecktemperatur nicht beliebig erhöht werden. Insbesondere die erniedrigte Längsstrecktemperatur führt zu einer stark beeinträchtigen Laufsicherheit der Folie, sowie zu einer unerwünschten Erhöhung der Spleißneigung. Die Porosität kann daher durch niedrigere Längsstrecktemperaturen von beispielsweise unter 70°C nicht mehr weiter verbessert werden.

Ferner ist es möglich die Porosität und Durchlässigkeit der Folie zusätzlich über die Streckgeschwindigkeit bei der Querstreckung zu beeinflussen. Eine langsame Querverstreckung erhöht die Porosität und Durchlässigkeit weiter, ohne dass es zu vermehrten Abrissen oder sonstigen Störungen während des Produktionsprozeßes kommt. Die Folie weißt eine spezielle Kombination aus hoher Porosität und Durchlässigkeit, mechanischer Festigkeit, gute Laufsicherheit beim Herstellprozeß und geringer Spleißneigung in Längsrichtung auf.

Nachfolgend wird auf die vorstehend hergestellte poröse BOPP Folie die erfindungsgemäße anorganische, vorzugsweise keramische, Beschichtung wird mittels bekannter Technologien, beispielsweise durch Rakeln oder Aufsprühen oder Drucken, in Form einer Dispersion, bevorzugt einer wässrigen Dispersion, auf die poröse BOPP Folie aufgetragen.

Hierbei wird die anorganische, vorzugsweise keramische, Beschichtung direkt auf die vorstehend hergestellte poröse BOPP Folie aufgetragen, so dass keine Vorbehandlung der Folie mit Haftvermittlern oder der Einsatz von Haftvermittlern in der zur Beschichtung eingesetzten keramischen Beschichtungsmasse notwendig ist. Darüber hinaus hat sich gezeigt, dass insbesondere bei porösen BOPP Folien keine Nachbehandlung der Oberfläche der Folie, insbesondere der Seite der Folie die nachfolgend beschichtet werden soll, mit einer der bekannten Methoden Corona-, Plasma- oder Flamm-Behandlung notwendig ist und die anorganische, vorzugsweise keramische, Beschichtung direkt auf die poröse BOPP Folie aufgetragen werden kann.

Die Auftragsmenge an Dispersion beträgt vorzugsweise zwischen 1g/m$^2$ und 80g/m$^2$. Anschließend wird die frisch beschichtet poröse BOPP Folie mittels handelsüblicher Trockner getrocknet, wobei der anwesende Binder aushärtet. Die Trocknung wird üblicherweise bei Temperaturen zwischen 50°C und 140°C durchgeführt. Die Trocknungszeiten betragen hierbei zwischen 30 Sekunden und 60 Minuten.

Mittels der vorliegenden Erfindung kann eine Folie zur Verfügung gestellt werden, die sich auf Grund der hohen Durchlässigkeit für die Anwendung in Hochenergiebatterien eignet und gleichzeitig die Anforderungen an die mechanischen Festigkeiten, insbesondere eine geringe Spleißneigung erfüllt sowie, die in dieser Anwendung benötigte thermische Stabilität.

Die Folie kann des Weiteren vorteilhaft in anderen Anwendungen eingesetzt werden, bei denen eine sehr hohe Durchlässigkeit gefordert wird oder sich vorteilhaft auswirken. Beispielsweise als hochporöser Separator in Batterien, insbesondere in Lithium-Batterien mit hoher Anforderung an die Leistung.

Die erfindungsgemäße anorganisch, vorzugsweise keramisch, beschichtete Separatorfolien auf Basis von porösen Polyolefinfolien umfasst eine poröse, biaxial orientierte Folie aus Polypropylen mit einer Porosität von 30 bis 80% und einer Durchlässigkeit von <1000s (Gurley Wert) und die Durchlässigkeit der erfindungsgemäßen Separatorfolien mit keramischer Beschichtung beträgt < 1500s (Gurley Wert).

Die auf der erfindungsgemäßen Separatorfolie vorhandene anorganische, vorzugsweise keramische, Beschichtung zeigt ein gutes Haftverhalten, wobei diese ohne Einsatz von Haftvermittlern erzielt wird. Das Haftverhalten wird wie folgt Beurteilt:

Bei schlechter Haftung der Beschichtung platzt die Beschichtung von der Kante her ab und kann mit den Fingern abgerieben werden.
Bei guter Haftung entsteht höchstens ein Riss an der Biegekante, die Haftung auf der Folie bleibt aber erhalten.

Zur Charakterisierung der Rohstoffe und der Folien wurden die folgenden Meßmethoden benutzt:

Partikelgrößen-Definition und Bestimmung:

Die Bestimmung der durchschnittlichen Partikeldurchmesser bzw. der mittleren Korngröße (= d50 bzw. d90) erfolgt durch ein Laserlichtstreuungsverfahren nach ISO 13320-1. Ein geeignetes Messgerät zur Partikelgrößenanalyse ist beispielsweise ein Microtrac S 3500.

Schmelzflußindex

Der Schmelzflußindex der Propylenpolymeren wurde nach DIN 53 735 bei 2,16 kg Belastung und 230 °C gemessen.

Schmelzpunkt

Der Schmelzpunkt ist im Sinne der vorliegenden Erfindung das Maximum der DSC Kurve. Zur Bestimmung des Schmelzpunkts wird eine DSC-Kurve mit einer Aufheiz- und Abkühlgeschwindigkeit von 10K/1min im Bereich von 20 bis 200°C aufgenommen. Für die Bestimmung des Schmelzpunkts wird wie üblich die zweite Aufheizkurve nachdem mit 10K/1min im Bereich von 200 bis 20°C abgekühlt wurde ausgewertet.

$\beta$-Gehalt der Vorfolie

Die Bestimmung des $\beta$-Gehaltes der Vorfolie erfolgt ebenfalls über eine DSC-Messung, die an der Vorfolie folgendermaßen durchgeführt wird: Die Vorfolie wird in der DSC zunächst mit einer Aufheizrate von 10K/min auf 220°C erhitzt und aufgeschmolzen und wieder abgekühlt Aus der 1. Aufheizkurve wird der Kristallinitätsgrad $K_{\beta,DSC}$ als Verhältnis der Schmelzenthalpien der $\beta$-kristallinen Phase ($H_\beta$) zu der Summe der Schmelzenthalpien von $\beta$- und $\alpha$-kristalliner Phase ($H_\beta + H_\alpha$) bestimmt.

$$K_{\beta,DSC}\ [\%] = 100 \times H_\beta / (H_\beta + H_\alpha)$$

Dichte

Die Dichte wird nach DIN 53 479, Verfahren A, bestimmt.

Bubble Point:

Der Bubble Point wurde nach der ASTM F316 gemessen.

Porosität

Als Porosität wird die Dichtereduzierung ($\rho_{Folie} - \rho_{pp}$) der Folie gegenüber der Dichte des reinen Polypropylens $\rho_{pp}$ wie folgt berechnet:

$$\text{Porosität } [\%] = 100 \times (\rho_{pp} - \rho_{Folie}) / \rho_{pp}$$

Permeabilität / Durchlässigkeit (Gurley-Wert)

Die Permeabilität der Folien wurde mit dem Gurley Tester 4110, nach ASTM D 726-58 gemessen. Dabei wird die Zeit (in sec) bestimmt die 100 cm$^3$ Luft benötigen, um durch die Folienfläche von 1 Inch$^2$ (6,452 cm$^2$) zu permeieren. Die Druckdifferenz über der Folie entspricht dabei dem Druck einer Wassersäule von 12,4 cm Höhe. Die benötigte Zeit entspricht dann dem Gurley-Wert.

Abschaltfunktion

Die Abschaltfunktion wird durch Gurleymessungen vor und nach einer Temperaturbehandlung bei einer Temperatur von 135°C bestimmt. Der Gurley Wert der Folie wird wie vorstehend beschrieben gemessen. Anschließend wird die Folie fünf Minuten lang im Wärmeofen der Temperatur von 135°C ausgesetzt. Anschließend wird der Gurley Wert wie beschrieben erneut ermittelt. Die Abschaltfunktion ist gegeben, wenn die Folie nach der Temperaturbehandlung einen Gurley Wert von mindestens 5000 aufweist und sich um mindestens 1000s erhöht hat.

Einsprung:

Der Einsprung gibt die Breitenänderung der Folie während der Längsverstreckung an. Hierbei bezeichnet $B_0$ die Breite der Folie vor und $B_1$ entsprechend die Breite der Folie nach der Längsverstreckung. Die Längsrichtung ist die Maschinenrichtung, als Querrichtung wird entsprechend die Richtung quer zum Maschinenlauf definiert. Als Einsprung in % wird dann die Differenz der ermittelten Breiten im Verhältnis zur ursprünglichen Breite $B_0$ mal 100 angegeben.

$$\text{Einsprung B } [\%] = [(B_0 - B_1) / B_0] *100 \, [\%]$$

Haftverhalten:

Es wird mit einer Schablone ein beschichtetes Folienstück von 6x6 cm ausgeschnitten. Dieses Stück wird mit 3cm Überlappung auf einen Edelstahlwürfel mit Kantenradius: 0,5 mm der Größe 8 x 8 x 8cm mit 3cm Überlappung aufgelegt. Die überstehenden 3cm werden dann auf der Würfelkante rechtwinklig abgeknickt. Bei schlechter Haftung der Beschichtung platzt die Beschichtung von der Kante her ab und kann mit den Fingern abgerieben werden. Bei guter Haftung entsteht höchstens ein Riss an der Biegekante, die Haftung auf der Folie bleibt aber erhalten.

Die Erfindung wird nunmehr durch die nachfolgenden Beispiele erläutert.

Beispiele:

Für die anorganische, vorzugsweise keramische Beschichtung wurden drei unterschiedliche anorganische Coatings angerührt. Dazu wurde ein handelsübliches PVDC-Coating (DIOFAN® A 297) als Binder mit den anorganischen Partikeln und durch Zugabe von Wasser und Isopropanol so eingestellt, dass die Viskosität des Coatings ein gleichmäßiges Verstreichen mittels Drahtrakel DIOFAN® A 297 auf der Polypropylenfolie ermöglicht. Zum anderen wurde der Anteil an PVDC's gerade so gewählt, dass zum einen nach Abtrocknen der Lösungsmittelkomponente eine Abriebfeste Beschichtung entsteht und zum anderen immer noch genug offene (Coatingfreie) Bereiche zwischen den keramischen Teilchen vorhanden sind, so dass eine offene luftdurchlässige, poröse Struktur entsteht. Die Zusammensetzung der Beschichtungsmassen, ist in Tab 1 detailliert aufgeführt. Als organische Partikel wurden sphärische Silikat (Zeeospheres™, 3M) und TiO2-Partikel ausgesucht.

Herstellung der im Beispiel genannten Folien:

Tabelle 1: Zusammensetzung Anorganische Coatings

|  | Partikel | Partikelgröße | Partikel WT. % | Wasser. Wt. % | Isopropanol % | PVDC Coating |
|---|---|---|---|---|---|---|
| Caot. 1 | Sphärisches Silikat (SiO2) | 1-10 $\mu$m | 65 | 13 | 8 | 13 |
| Caot. 2 | Sphärisches Silikat (SiO2) | 1-10 $\mu$m | 58 | 17 | 8 | 17 |
| Caot. 3 | TiO2 | 100-300 nm | 47 | 23 | 12 | 18 |

Folienbeispiel 1

Nach dem Extrusionsverfahren wurde aus einer Breitschlitzdüse bei einer Extrusionstemperatur von 240 bis 250°C °C eine einschichtige Vorfolie extrudiert. Diese Vorfolie wurde zunächst auf einer Kühlwalze abgezogen und abgekühlt. Anschließend wurde die Vorfolie in Längs- und Querrichtung orientiert und abschließend fixiert. Die Folie hatte die folgende Zusammensetzung:

Ca. 60 Gew.-%- hochisotaktisches Propylenhomopolymerisat (PP) mit einer $^{13}$C-NMR Isotaktizität von 97% und einem n-heptanlöslichen Anteil von 2,5 Gew.-% (bezogen auf 100 % PP) und einem Schmelzpunkt von 165°C; und einem Schmelzflußindex von 2,5 g/10 min bei 230 °C und 2,16 kg Belastung (DIN 53 735) und ca. 20 Gew.-% HDPE (High Density Polyethylen) mit einer Dichte von 0,954 (ISO 1183) und einem MFI von 0,4 g/10 min bei 190 °C und 2,16 kg Belastung (ISO 1133/D) bzw. 27 g/10 min bei 190 °C und 21,6 kg Belastung (ISO 1333/G) und Schmelzpunkt von 130°C (DSC: Peak bei 10 °C/min Heizrate), der Schmelzebereich beginnt bei 125°C. ca. 20 Gew.-% Propylen-Ethylen-Blockcopolymerisat mit einem Ethylenanteil von 5 Gew.-% bezogen auf das Blockcopolymer und einem MFI (230°C und 2,16 kg) von 6 g/10min und einem Schmelzpunkt (DSC) von 165°C eingesetzt und 0,04 Gew.-% Ca-Pimelat als β-Nukleierungsmittel.

Die Folie enthielt zusätzlich Stabilisator und Neutralisationsmittel in den geringen üblichen Mengen.

Die aufgeschmolzene Polymermischung wurde nach der Extrusion über eine erste Abzugswalze und ein weiteres Walzentrio abgezogen und verfestigt, anschließend längsgestreckt, quergestreckt und fixiert, wobei im Einzelnen die folgenden Bedingungen gewählt wurden:

| Extrusion: | Extrusionstemperatur 235 °C |
|---|---|
| Abzugswalze: | Temperatur 125°C, |
| Abzugsgeschwindigkeit: | 4m/min |
| Längsstreckung: | Streckwalze T = 90 °C |
| Längsstreckung um den | Faktor 3.0 |
| Querstreckung: | Aufheizfelder T = 125 °C |
| Streckfelder | T = 125 °C |
| Querstreckung um den | Faktor 5.0 |
| Fixierung: | T = 125 °C |

Die so hergestellte poröse Folie war ca. 25 μm dick und wies eine Dichte von 0,38 g/cm$^3$ auf und zeigte ein gleichmäßiges weiß-opakes Aussehen.

Folienbeispiel 2

Nach dem Extrusionsverfahren wurde aus einer Breitschlitzdüse bei einer Extrusionstemperatur von 240 bis 250°C °C eine einschichtige Vorfolie extrudiert. Der Extrusionsdurchsatz wurde um 30% gegenüber Folienbeispiel 1 erhöht. Diese Vorfolie wurde zunächst auf einer Kühlwalze abgezogen und abgekühlt. Anschließend wurde die Vorfolie in Längs- und Querrichtung orientiert und abschließend fixiert. Die Folie hatte die folgende Zusammensetzung:

Ca. 80 Gew.-% hochisotaktisches Propylenhomopolymerisat (PP) mit einer $^{13}$C-NMR Isotaktizität von 97% und einem n-heptanlöslichen Anteil von 2,5 Gew.-% (bezogen auf 100 % PP) und einem Schmelzpunkt von 165 °C; und einem Schmelzflußindex von 2,5 g/10 min bei 230 °C und 2,16 kg Belastung (DIN 53 735) und
ca. 20 Gew.-% HDPE (High Density PolyEthylen) mit einer Dichte von 0,954 (ISO 1183) und einem MFI von 0,4 g/10 min bei 190 °C und 2,16 kg Belastung (ISO 1133/D) bzw. 27 g/10 min bei 190 °C und 21,6 kg Belastung (ISO 1333/G) und Schmelzpunkt von 130°C (DSC: Peak bei 10 °C/min Heizrate), der Schmelzebereich beginnt bei 125°C. Des Weiteren enthält die Folie 0,04 Gew.-%
Ca-Pimelat als β-Nukleierungsmittel.

Die Folie enthielt zusätzlich Stabilisator und Neutralisationsmittel in üblichen Mengen.
Die aufgeschmolzene Polymermischung wurde nach der Extrusion über eine erste Abzugswalze und ein weiteres Walzentrio abgezogen und verfestigt, anschließend längsgestreckt, quergestreckt und fixiert, wobei im Einzelnen die folgenden Bedingungen gewählt wurden:

| Extrusion: | Extrusionstemperatur 235 °C |
|---|---|
| Abzugswalze: | Temperatur 125°C, Verweilzeit auf der Abzugswalze 60 sec. |
| Längsstreckung: | Streckwalze T = 90 °C |
| Längsstreckung um den | Faktor 3.0 |
| Querstreckung: | Aufheizfelder T = 125 °C |
| Streckfelder | T = 125 °C |
| Querstreckung um den | Faktor 5.0 |
| Fixierung: | T = 125 °C |

Die so hergestellte poröse Folie war ca. 30 μm dick und wies eine Dichte von 0,38 g/cm$^3$ auf und zeigte ein gleichmäßiges weiß-opakes Aussehen. Der Gurley-Wert betrug 380 s. Nach der Temperaturbehandlung im Ofen bei 135°C für 5 min betrug der Gurley-Wert > 9000 s/100 cm$^3$

Beispiel 1:

Auf eine mikroporöse BOPP Folie mit Abschaltfunktion (Folienbeispiel 1) wurde mit einer Drahtrakel (Drahtdurchmesser: 0,4mm) Silikat Beschichtung mit der Zusammensetzung Coating 1 (Tab. 1) von Hand aufgetragen. Die Benetzung der Folie mit der keramischen Suspension ist gleichmäßig. Die so beschichtete Folie wird anschließend eine Stunde bei 90°C im Trockenschrank getrocknet. Das Coating zeigt nach dem Trocknen eine gute Haftung auf der Folie.

Anschließend wurden Auftragsgewicht, Schichtdicke des Coatings und die Luftdurchlässigkeit anhand des Gurley-Wertes bestimmt. Es wird nur ein geringfügiger Anstieg des Gurleywertes von 360 s auf 380 s beobachtet.

Beispiel 2:

Auf eine mikroporöse BOPP Folie mit Abschaltfunktion (Folienbeispiel 1) wurde mit der Drahtrakel (Drahtdurchmesser: 0,4mm) Silikat Beschichtung mit der Zusammensetzung Coating 2 (Tab.1) von Hand aufgetragen. Nach der Beschichtung ist die Benetzung der Folie mit der keramischen Suspension gleichmäßig. Nach dem Trocknen zeigt das Coating, wie in Bsp.2 eine bessere Haftung als in Beispiel 5. Auch der Gurley-Werte ist deutlich erhöht Es wird ein Anstieg des Gurley-wertes von 360 s auf 570 s beobachtet.

Beispiel 3:

Es wurde auf eine mikroporöse BOPP Folie mit Abschaltfunktion (Folienbeispiel 1) mit der Drahtrakel (Drahtdurchmesser: 0,4mm) Titanoxid Beschichtung mit der Zusammensetzung Coating 3 (Tab.1) von Hand aufgetragen. Nach der Beschichtung ist die Benetzung der Folie mit der keramischen Suspension gleichmäßig. Nach dem Trocknen zeigt das Coating eine gute Haftung auf der Folie. Es wird ein Anstieg des Gurleywertes von 360 s auf 460 s beobachtet.

Beispiel 4:

Auf eine mikroporöse BOPP Folie mit Abschaltfunktion (Folienbeispiel 2) wurde mit der Drahtrakel (Drahtdurchmesser: 0,7mm) Silikat Beschichtung mit der Zusammensetzung Coating 1 (Tab.1) von Hand aufgetragen. Nach der Beschichtung ist die Benetzung der Folie mit der keramischen Suspension gleichmäßig. Nach dem Trocknen zeigt das Coating eine gute Haftung. Der Gurley-Werte erhöht sich von 380 s auf 420 s.

Beispiel 5:

Es wurde auf eine mikroporöse BOPP Folie mit Abschaltfunktion (Folienbeispiel 1) mit der Drahtrakel (Drahtdurchmesser: 0,7mm) Titanoxid Beschichtung mit der Zusammensetzung Coating 3 (Tab.1) von Hand aufgetragen. Nach der Beschichtung ist die Benetzung der Folie mit der keramischen Suspension gleichmäßig. Nach dem Trocknen zeigt das Coating eine gute Haftung auf der Folie. Es wird ein Anstieg des Gurleywertes von 380 s auf 510 s beobachtet.

Beispiel 6 (Vergleich):

Auf einen kommerziell erhältlichen mikroporösen Separator der Fa. Celgard (C200) wurde wie in Beispiel 1 mit einer Drahtrakel (Drahtdurchmesser: 0,4mm) versucht die Silikat Beschichtung mit der Zusammensetzung Coating 1 (Tab. 1) von Hand aufzutragen. Die Coating Lösung zeigt keine Benetzung und platzt nach dem Trocknen wieder ab.

Beispiel 7 (Vergleich):

Auf dem Separator der Fa. Celgard (C200) wurde wie in Beispiel 2 mit einer Drahtrakel (Drahtdurchmesser: 0,4mm) versucht die Silikat Beschichtung mit der Zusammensetzung Coating 2 (Tab. 1) von Hand aufzutragen. Auch die Coating Lösung mit erhöhtem PVDC-Anteil zeigt keine Benetzung und platzt nach dem Trocknen wieder ab.

Beispiel 8 (Vergleich):

Auf einen anderen kommerziell erhältlichen Polyolefin Separator der Fa. UBE wurde wie in Beispiel 1 mit einer Drahtrakel (Drahtdurchmesser: 0,4mm) versucht die Silikat Beschichtung mit der Zusammensetzung Coating 1 (Tab. 1) von Hand aufzutragen. Die Beschichtung zeigt keine Benetzung und platzt nach dem Trocknen wieder ab.

Beispiel 9 (Vergleich):

Auf den Polyolefin Separator der Fa. UBE wurde wie in Beispiel 2 mit einer Drahtrakel (Drahtdurchmesser: 0,4mm) versucht die Silikat Beschichtung mit der Zusammensetzung Coating 2 (Tab. 1) von Hand aufzutragen. Auch das Coating mit erhöhtem PVDC-Anteil zeigt keine Benetzung und platzt nach dem Trocknen wieder ab.

Beispiel 10 (Vergleich):

Auf eine kommerziell erhältliche biaxial verstreckten Polypropylen Verpackungsfolie (GND 30 der Fa. Treofan), die zwecks Bedruckbarkeit durch Corona-Behandlung in der Oberflächenspannung gegenüber unbehandelten PP-Folien erhöht ist, wie in Beispiel 1 mit einer Drahtrakel (Drahtdurchmesser: 0,4mm) versucht die Silikat Beschichtung mit der Zusammensetzung Coating 1 (Tab. 1) von Hand aufzutragen. Auch das Coating mit erhöhtem PVDC-Anteil zeigt keine Benetzung und platzt nach dem Trocknen wieder ab.

Beispiel 11 (Vergleich):

Auch Coating 2 mit erhöhtem PVDC-Anteil zeigt keine Benetzung und Haftung auf der biaxial verstreckten Polypropylen Verpackungsfolie GND 30 der Fa. Treofan.

Tabelle. 2:

| | Separator/ Folien Typ | Coating Rezeptur | Draht durchm. Rakel / mm | Gurley vor Coating | Gurley nach Coating | Abschaltfunktion Gurley 5min@135°C | Schichtdicke Coating / $\mu$m | Auftragsgewicht / g/m$^2$ | Benetzung | Haftung |
|---|---|---|---|---|---|---|---|---|---|---|
| Bsp. 1 | PBS 20 | Coat. 1 | 0,4 | 360 | 380 | > 5000s | 37 | 53 | ja | ja |
| Bsp. 2 | PBS 20 | Coat. 2 | 0,4 | 360 | 570 | > 5000s | 33 | 50 | ja | ja |
| Bsp. 3 | PBS 20 | Coat. 3 | 0,4 | 360 | 460 | > 5000s | 35 | 59 | ja | ja |
| Bsp. 4 | PBS 30 | Coat. 1 | 0,7 | 380 | 420 | > 5000s | 52 | 63 | ja | ja |
| Bsp. 5 | PBS 30 | Coat. 3 | 0,7 | 380 | 510 | > 5000s | 52 | 63 | ja | ja |
| Bsp. 6 (V) | Celgard C 200 | Coat. 2 | 0,4 | 660 | - | > 5000s | - | - | Keine | Keine |
| Bsp. 7 (V) | Celgard C 200 | Coat. 3 | 0,4 | 660 | - | > 5000s | - | - | Keine | Keine |
| Bsp. 8 (V) | UBE 3014 | Coat. 2 | 0,4 | 580 | - | > 5000s | - | - | Keine | Keine |
| Bsp. 9 (V) | UBE 3014 | Coat. 3 | 0,4 | 580 | - | > 5000s | - | - | Keine | Keine |
| Bsp. 10 (V) | GND 30 | Coat. 2 | 0,4 | - | - | - | - | - | Keine | Keine |
| Bsp. 11 (V) | GND 30 | Coat. 3 | 0,4 | - | - | - | - | - | Keine | Keine |

**Patentansprüche**

1. Biaxial orientierte, ein- oder mehrschichtige poröse Folie, welche mindestens eine poröse Schicht umfasst und diese Schicht mindestens ein Propylenpolymer und Polyethylen enthält,

    (I) die Porosität der porösen Folie 30% bis 80% beträgt und
    (II) die Durchlässigkeit der porösen Folie <1000s (Gurley Wert) beträgt,

    **dadurch gekennzeichnet, dass**

    (III) die poröse Folie eine anorganische, vorzugsweise keramische, Beschichtung aufweist und
    (IV) die beschichtete poröse Folie einen Gurley Wert von <1500s aufweist und
    (V) die beschichtete poröse Folie einen Gurley Wert von > 6000s aufweist, wenn diese für 5 Minuten über 140°C erhitzt wird,

    und wobei mindestens ein β-Nukleierungsmittel in der porösen Schicht der Folie vorliegt.

2. Folie nach Anspruch 1, **dadurch gekennzeichnet, dass** die Folie 50 bis 85 Gew.-% Propylenhomopolymer, 15 bis 50 Gew.-% Propylen-Blockcopolymer und 50 bis 10.000ppm β-Nukleierungsmittel enthält.

3. Folie nach einem der Ansprüche 1 bis 2, **dadurch gekennzeichnet, dass** die anorganische, vorzugsweise keramische, Beschichtung anorganische, vorzugsweise keramische, Partikel umfasst, deren Partikelgröße ausgedrückt als D50 Wert im Bereich zwischen 0,05 und 15$\mu$m, vorzugweise im Bereich 0,1 bis 10$\mu$m, liegt und dass die anorganischen, vorzugsweise keramischen, Partikel ein elektrisch nichtleitendes Oxid der Metalle Al, Zr, Si, Sn, Ti und/oder Y umfasst.

4. Folie nach einem der Ansprüche 1 bis 3, **dadurch gekennzeichnet, dass** die anorganische, vorzugsweise keramische, Beschichtung noch mindestens einen endverfestigten Binder auf Basis von Polyvinylendichlorid (PVDC) aufweist,

5. Folie nach einem der Ansprüche 1 bis 4, **dadurch gekennzeichnet, dass** die anorganische, vorzugsweise keramische, Beschichtung anorganische, vorzugsweise keramische, Partikel umfasst deren Druckfestigkeit min. 100kPa, bevorzugt von min. 150kPa, insbesondere von min. 250kPa, beträgt.

6. Folie nach Anspruch 4 oder 5, **dadurch gekennzeichnet, dass** die Auftragsmenge an endverfestigten Binder ausgewählt aus der Gruppe der Binder auf Basis von Polyvinylendichlorid (PVDC), Polyacrylate, Polymethacrylate, Polyethylenimine, Polyester, Polyamide, Polyimide, Polyurethane, Polycarbonate, Silikatbinder, Polymere aus der Klasse der halogenierten Polymere, beispielsweise PTFE, und Gemische derselben, 0,5g/m$^2$ bis 20g/m$^2$, vorzugs-weise 0,1g/m$^2$ bis 10g/m$^2$, beträgt.

7. Folie nach einem der Ansprüche 1 bis 6, **dadurch gekennzeichnet, dass** die anorganische, vorzugsweise keramische, Beschichtung direkt auf die poröse Folie aufgebracht ist.

8. Verfahren zur Herstellung einer beschichteten Folie definiert in den Ansprüchen 1 bis 7 umfassend die Maßnahmen:

    (i) Extrusion einer einschichtigen oder mehrschichtigen porösen Polypropylenfolie bei welchem Propylenpolymer und β-Nukleierungsmittel in Gegenwart von Polyethylen in einem Extruder aufgeschmolzen und durch eine Flachdüse auf eine Abzugswalze extrudiert werden,
    (ii) anschließend der extrudierte Schmelzefilm unter Ausbildung von β-Kristalliten abgekühlt und verfestigt wird,
    (iii) anschließend diese Folie in Längsrichtung und danach in Querrichtung verstreckt wird, wobei bei der Querverstreckung mit einer langsamen Streckgeschwindigkeit von weniger als 40%/sec verstreckt wird, und die Folie nach der Herstellung einen Gurley Wert von < 1000s aufweist,
    (iv) aufbringen einer Dispersionen umfassend

        (a) 20 Gew.-% bis 90 Gew.-%, besonders bevorzugt 30 Gew.-% bis 80 Gew.-% an anorganischen, vorzugsweise keramischen, Partikeln,
        (b) 1 Gew.-% bis 30 Gew.-%, besonders bevorzugt 1,5 Gew.-% bis 20 Gew.-% Binder ausgewählt aus der Gruppe der Binder auf Basis von Polyvinylendichlorid (PVDC), Polyacrylate, Polymethacrylate, Polyethylenimine, Polyester, Polyamide, Polyimide, Polyurethane, Polycarbonate, Silikatbinder, Polymere aus der Klasse der halogenierten Polymere, beispielsweise PTFE, und Gemische derselben, wobei innerhalb der Binder Binder auf Basis von Polyvinylendichlorid (PVDC) bevorzugt sind,

(c) gegebenenfalls 1Gew.-% bis 30Gew.-%, besonders bevorzugt 0,01Gew.-% bis 0,5 Gew.-% organische Substanzen, welche die Dispersionsstabilität verbessern oder die Benetzbarkeit zur porösen BOPP Folie erhöhen, insbesondere ein oder mehrwertige Alkohole,

(d) gegebenenfalls 0,00001 Gew.-% bis 10 Gew.-%, besonders bevorzugt 0,001 Gew.-% bis 5 Gew.-% an weiteren Additiven, wie Dispersionsstabilisatoren und/oder Entschäumer

(e) Wasser, dass die Summe aller Komponenten der Dispersion 100 Gew.-% ergibt,

(v) Trocknen der mit der Dispersion beschichteten porösen Folie.

9. Verfahren nach Anspruch 8, **dadurch gekennzeichnet, dass** die poröse BOPP Folie nach Schritt (iii) und vor dem Aufbringen der Beschichtung in Schritt (iv) keinerlei weitere Nachbehandlung erfährt und direkt beschichtet wird.

10. Verwendung einer Dispersion umfassend

(a) 20 Gew.-% bis 90 Gew.-%, besonders bevorzugt 30 Gew.-% bis 80 Gew.-% an anorganischen, vorzugsweise keramischen Partikeln,

(b) 1 Gew.-% bis 30 Gew.-%, besonders bevorzugt 1,5 Gew.-% bis 20 Gew.-% Binder ausgewählt aus der Gruppe der Binder auf Basis von Polyvinylendichlorid (PVDC), Polyacrylate, Polymethacrylate, Polyethylenimine, Polyester, Polyamide, Polyimide, Polyurethane, Polycarbonate, Silikatbinder, gegraftete Polyolefine, Polymere aus der Klasse der halogenierten Polymere, beispielsweise PTFE, und Gemische derselben, wobei innerhalb der Binder Binder auf Basis von Polyvinylendichlorid (PVDC) bevorzugt sind,

(c) gegebenenfalls 1Gew.-% bis 30Gew.-%, besonders bevorzugt 0,01Gew.-% bis 0,5 Gew.-% organische Substanzen, welche die Dispersionsstabilität verbessern oder die Benetzbarkeit zur porösen BOPP Folie erhöhen, insbesondere ein oder mehrwertige Alkohole,

(d) gegebenenfalls 0,00001 Gew.-% bis 10 Gew.-%, besonders bevorzugt 0,001 Gew.-% bis 5 Gew.-% an weiteren Additiven, wie Dispersionsstabilisatoren und/oder Entschäumer

(e) Wasser, dass die Summe aller Komponenten der Dispersion 100 Gew.-% ergibt,

zur Herstellung einer beschichteten Folie definiert in den Ansprüchen 1 bis 7.

11. Verwendung einer Folie nach einem der Ansprüche 1 bis 7 als Separator in Hochenergie-oder Hochleistungssystemen, insbesondere in Lithium-, Lithiumionen-, Lithium-Polymer-, und Erdalkali-Batterien.

## Claims

1. A biaxially oriented single-layer or multilayer porous film, which comprises at least one porous layer and this layer contains at least one propylene polymer and polyethylene,

(i) the porosity of the porous film is 30 % to 80 % and
(ii) the permeability of the porous film is <1000s (Gurley value),

**characterised in that**

(iii) the porous film has an inorganic, preferably ceramic coating and
(iv) the coated porous film has a Gurley value of < 1,500 s, and
(v) the coated porous film has a Gurley value of > 6,000 s when heated for 5 minutes above 140°,

and wherein at least one $\beta$-nucleation agent is present in the porous layer of the film.

2. The film according to claim 1, **characterised in that** the film contains 50 to 85 % by weight of propylene homopolymer, 15 to 50 % by weight of propylene block copolymer, and 50 to 10,000 ppm of $\beta$-nucleation agent.

3. The film according to either one of claims 1 or 2, **characterised in that** the inorganic, preferably ceramic coating comprises inorganic, preferably ceramic particles, of which the particle size, expressed as D50 value, lies in the range between 0.05 and 15 $\mu$m, preferably in the range 0.1 to 10 $\mu$m, and **in that** the inorganic, preferably ceramic particle comprises an electrically non-conductive oxide of the metals Al, Zr, Si, Sn, Ti and/or Y.

4. The film according to any one of claims 1 to 3, **characterised in that** the inorganic, preferably ceramic coating also comprises at least one end-consolidated binder based on polyvinylene dichloride (PVDC).

5. The film according to any one of claims 1 to 4, **characterised in that** the inorganic, preferably ceramic coating comprises inorganic, preferably ceramic particles, of which the compressive strength is at least 100 kPa, preferably at least 150 kPa, in particular at least 250 kPa.

6. The film according to claim 4 or 5, **characterised in that** the applied amount of end-consolidated binder is selected from the group of binders based on polyvinylene dichloride (PVDC), polyacrylates, polymethacrylates, polyethylene imines, polyesters, polyamides, polyimides, polyurethanes, polycarbonates, silicate binders, polymers from the class of halogenated polymers, for example PTFE, and mixtures thereof is 0.5 g/m$^2$ to 20 g/m$^2$, preferably 0.1 g/m$^2$ to 10 g/m$^2$.

7. The film according to any one of claims 1 to 6, **characterised in that** the inorganic, preferably ceramic coating is applied directly to the porous film.

8. A method for producing a coated film defined in Claims 1 to 7, comprising the following measures:

   (i) extrusion of a single-layer or multilayer porous polypropylene film in which propylene polymer and $\beta$-nucleation agent are melted in an extruder in the presence of polyethylene and are extruded through a flat film die onto a take-off roll,
   (ii) the extruded melt film is then cooled and solidified, thus forming $\beta$-crystallites,
   (iii) this film is then drawn in the longitudinal direction and then in the transverse direction, wherein, in the case of the transverse drawing, the film is drawn at a slow drawing speed of less than 40 %/sec, and the film has a Gurley value of < 1,000 s after production,
   iv) application of a dispersion comprising

   (a) 20 % by weight to 90 % by weight, particularly preferably 30 % by weight to 80 % by weight, of inorganic, preferably ceramic particles,
   (b) 1 % by weight to 30 % by weight, particularly preferably 1.5 % by weight to 20 % by weight, of binder selected from the group of binders based on polyvinylene dichloride (PVDC), polyacrylates, polymethacrylates, polyethylene imines, polyesters, polyamides, polyimides, polyurethanes, polycarbonates, silicate binders, polymers from the class of halogenated polymers, for example PTFE, and mixtures thereof, wherein, among the binders, binders based on polyvinylene dichloride (PVDC) are preferred,
   (c) optionally 1 % by weight to 30 % by weight, particularly preferably 0.01 % by weight to 0.5 % by weight, of organic substances which improve the dispersion stability or increase the wettability of the porous BOPP film, in particular monovalent or polyvalent alcohols,
   (d) optionally 0.00001 % by weight to 10 % by weight, particularly preferably 0.001 % by weight to 5 % by weight, of further additives, such as dispersion stabilisers and/or antifoaming agents,
   (e) water to give a sum of all components of the dispersion of 100 % by weight,

   (v) drying of the porous coated with the dispersion.

9. The method according to claim 8, **characterised in that** the porous BOPP film after step (iii) and prior to the application of the coating in step (iv) does not experience any further post treatment and is coated directly.

10. Use of a dispersion comprising

   (a) 20 % by weight to 90 % by weight, particularly preferably 30 % by weight to 80 % by weight, of inorganic, preferably ceramic particles,
   (b) 1 % by weight to 30 % by weight, particularly preferably 1.5 % by weight to 20 % by weight, of binder selected from the group of binders based on polyvinylene dichloride (PVDC), polyacrylates, polymethacrylates, polyethylene imines, polyesters, polyamides, polyimides, polyurethanes, polycarbonates, silicate binders, grafted polyolefins, polymers from the class of halogenated polymers, for example PTFE, and mixtures thereof, wherein, among the binders, binders based on polyvinylene dichloride (PVDC) are preferred,

(c) optionally 1 % by weight to 30 % by weight, particularly preferably 0.01 % by weight to 0.5 % by weight, of organic substances which improve the dispersion stability or increase the wettability of the porous BOPP film, in particular monovalent or polyvalent alcohols,

(d) optionally 0.00001 % by weight to 10 % by weight, particularly preferably 0.001 % by weight to 5 % by weight, of further additives, such as dispersion stabilisers and/or antifoaming agents,

(e) water to give a sum of all components of the dispersion of 100 % by weight

fort he production of a coated film defined in claims 1 to 7.

11. Use of a film according to any one of claims 1 to 7 as a separator in high-energy or high-power systems, in particular in lithium, lithium-ion, lithium-polymer and alkaline earth batteries.


**Revendications**

1. Film poreux monocouche ou multicouches, à orientation biaxiale, lequel comprend au moins une couche poreuse et ladite couche contenant au moins un polymère de polypropylène et un polyéthylène,

   (I) la porosité du film poreux s'élevant à de 30 % à 80 % et
   (II) la perméabilité du film poreux étant < 1000s (valeur Gurley),

   **caractérisé en ce que**

   (III) le film poreux comporte un revêtement anorganique, de préférence céramique
   et
   IV) le film poreux revêtu présente une valeur Gurley de < 1500s et
   (V) le film poreux revêtu présente une valeur Gurley de > 6000s lorsqu'on le chauffe pendant 5 minutes au-delà de 140°C,
   et au moins un agent de nucléation $\beta$ étant présent dans le film poreux.

2. Film selon la revendication 1, **caractérisé en ce que** le film contient de 50 à 85 % en poids d'un homopolymère de propylène, de 15 à 50 % en poids d'un polymère séquencé de propylène et de 50 à 10.000 ppm d'un agent de nucléation $\beta$.

3. Film selon l'une quelconque des revendications 1 ou 2, **caractérisé en ce que** le revêtement anorganique, de préférence céramique comprend des particules anorganiques, de préférence céramiques, dont la taille de particules, exprimée en valeur D50 se situe dans l'ordre compris entre 0,05 et 15 pm, de préférence dans l'ordre de 0,1 à 10 $\mu$m et **en ce que** la particule anorganique, de préférence céramique comprend un oxyde non conducteur électrique des métaux Al, Zr, Si, Sn, Ti et/ou Y.

4. Film selon l'une quelconque des revendications 1 à 3, **caractérisé en ce que** le revêtement anorganique, de préférence céramique comporte encore au moins un agent liant à consolidation finale sur base de poly(chlorure de vinylidène (PVDC) .

5. Film selon l'une quelconque des revendications 1 à 4, **caractérisé en ce que** le revêtement anorganique, de préférence céramique comprend des particules anorganiques, de préférence céramiques dont la résistance à la pression est d'au moins 100 kPa, de préférence d'au moins 150 kPa, notamment d'au moins. 250 kPa,.

6. Film selon la revendication 4 ou 5, **caractérisé en ce que** la quantité d'application d'agent liant à consolidation finale, choisi dans le groupe des agents liants sur la base de poly(chlorure de vinylidène (PVDC), de polyacrylates, de polyméthacrylate, de polyéthylène-imines, de polyesters, de polyamides, de poly-imides, de polyuréthanes, de polycarbonates, de liants de silicates, de polymères de la classe des polymères halogénés, par exemple de PTFE et de mélanges de ces derniers, s'élève à de 0,5g/m$^2$ à 20g/m$^2$, de préférence de 0,1g/m$^2$ à 10g/m$^2$.

7. Film selon l'une quelconque des revendications 1 à 6, **caractérisé en ce que** le revêtement anorganique, de préférence céramique est appliqué directement sur le film poreux..

8. Procédé destiné à fabriquer un film revêtu, défini dans les revendications 1 à 7, comprenant les actions :

(i) de l'extrusion d'un film poreux monocouche ou multicouches de polypropylène, lors duquel on fait fondre le polymère de propylène et l'agent de nucléation β en présence de polyéthylène dans une extrudeuse et on les extrude à travers une tuyère plate sur un rouleau de traction ,

(ii) on fait refroidir et on solidifie ensuite le film fondu extrudé en formant des cristallites β,

(iii) on étire ensuite ledit film dans la direction longitudinale et ensuite dans la direction transversale, lors de l'étirage transversal, l'étirage s'effectuant à une vitesse d'étirage lente, inférieure à 40%/ seconde et après la fabrication, le film présentant une valeur Gurley < 1000s,

(iv) de l'application d'une dispersion, comprenant

(a) de 20 % en poids à 90 % en poids, de manière particulièrement préférée de 30 % en poids à 80 % en poids de particules anorganiques, de préférence céramiques,

(b) de 1 % en poids à 30 % en poids, de manière particulièrement préférée, de 1,5 % en poids à 20 % en poids d'un agent liant, choisi dans le groupe des agents liants sur la base de poly(chlorure de vinylidène (PVDC), de polyacrylates, de polyméthacrylate, de polyéthylène-imines, de polyesters, de polyamides, de poly-imides, de polyuréthanes, de polycarbonates, de liants de silicates, de polymères de la classe des polymères halogénés, par exemple de PTFE et de mélanges de ces derniers, parmi les agents liants, des agents liants sur la bas de poly(chlorure de vinylidène (PVDC) étant préconisés,

(c) le cas échéant, de 1 % en poids à 30 % en poids, de manière particulièrement préférée, de 0,01% en poids à 0,5 % en poids de substances organiques, lesquelles améliorent la stabilité à la dispersion ou la mouillabilité en un film BOPP poreux, de préférence d'alcools monovalents ou polyvalents,

(d) le cas échéant, de 0, 00001 % en poids à de 10 % en poids, de manière particulièrement préférée, de 0,001 % en poids à 5 % en poids d'additifs supplémentaires, comme des stabilisateurs de dispersion et/ou des agents anti-mousse,

(e) de l'eau, pour atteindre une somme de 100 % en poids de tous les composants de la dispersion,

(v) du séchage du film poreux revêtu de la dispersion.

9. Procédé selon la revendication 8, **caractérisé en ce qu'**après l'étape (iii), et avant le revêtement dans l'étape (iv), on ne soumet le film BOPP à aucun traitement supplémentaire et on le revêt directement.

10. Utilisation d'une dispersion comprenant

(a) de 20 % en poids à 90 % en poids, de manière particulièrement préférée, de 30 % en poids à 80 % en poids de particules anorganiques, de préférence céramiques,

(b) de 1 % en poids à 30 % en poids, de manière particulièrement préférée, de 1,5 % en poids à 20 % en poids d'un agent liant choisi dans le groupe des agents liants sur la base de sur la base de poly(chlorure de vinylidène (PVDC), de polyacrylates, de polyméthacrylate, de polyéthylène-imines, de polyesters, de polyamides, de poly-imides, de polyuréthanes, de polycarbonates, de liants de silicates, de polymères de la classe des polymères halogénés, par exemple de PTFE et de mélanges de ces derniers, parmi les agents liants, des agents liants sur la bas de poly(chlorure de vinylidène (PVDC) étant préconisés,

(c) le cas échéant, de 1 % en poids à 30 % en poids, de manière particulièrement préférée, de 0,01% en poids à 0,5 % en poids de substances organiques, lesquelles améliorent la stabilité à la dispersion ou la mouillabilité en un film BOPP poreux, de préférence d'alcools monovalents ou polyvalents,

(d) le cas échéant, de 0,00001 % en poids à de 10 % en poids, de manière particulièrement préférée, de 0,001 % en poids à 5 % en poids d'additifs supplémentaires, comme des stabilisateurs de dispersion et/ou des agents anti-mousse,

(e) de l'eau, pour atteindre une somme de 100 % en poids de tous les composants de la dispersion,

pour la fabrication d'un film revêtu, défini dans les revendications 1 à 7.

11. Utilisation d'un film selon l'une quelconque des revendications 1 à 7 en tant que séparateur dans des systèmes haute énergie ou haute puissance, notamment dans des batteries au lithium-, aux ions de lithium, au polymère de lithium et alcalinoterreuses.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010048395 A
- US 2011171523 A
- US 2007020525 A
- DE 19838800
- DE 10208277
- WO 2005038946 A
- US 4794136 A

- WO 2010145770 A
- DE 102010018374 A
- DE 3610644
- DE 4420989
- EP 0557721 A
- DE 10208277 A